# EUROPÄISCHE PATENTSCHRIFT

(11) **EP 1 945 976 B1**
(45) Veröffentlichungstag und Bekanntmachung des Hinweises auf die Patenterteilung: **20.05.2009**
(21) Anmeldenummer: 06723949.1
(22) Anmeldetag: 01.04.2006
(51) Int. Cl.: F16K 1/44

(54) **DOPPELSITZVENTIL**
DOUBLE SEAT VALVE
SOUPAPE A DOUBLE SIEGE

(30) Priorität: 12.11.2005 DE 102005054123; 25.11.2005 DE 102005056624; 12.12.2005 DE 102005059709
(43) Veröffentlichungstag der Anmeldung: 23.07.2008
(73) Patentinhaber: GEA Tuchenhagen GmbH, 21514 Büchen (DE)
(72) Erfinder: BURMESTER, Jens, 23883 Grambek (DE); SÜDEL, Matthias, 23626 Ratekau (DE)
(74) Vertreter: Hauck Patent- und Rechtsanwälte
(86) Internationale Anmeldenummer: PCT/EP2006/002989
(87) Internationale Veröffentlichungsnummer: WO 2007/054134

(56) Entgegenhaltungen:
- EP-A- 0 174 384
- WO-A-98/54494

## Beschreibung

### TECHNISCHES GEBIET

Die Erfindung betrifft ein Doppelsitzventil mit zwei seriell angeordneten, relativ zueinander bewegbaren Schließgliedern, die in der Schließstellung des Doppelsitzventils das Überströmen von Fluiden von einem Ventilgehäuseteil in ein anderes verhindern, die sowohl in der Schließ- als auch in der Offenstellung einen Leckagehohlraum zwischen sich begrenzen, der mit der Umgebung des Doppelsitzventils verbunden ist, wobei in der Schließstellung das als Schieberkolben ausgebildete erste Schließglied in einer die Ventilgehäuseteile miteinander verbindenden Verbindungsöffnung dichtend Aufnahme findet und im Zuge seiner Öffnungsbewegung am einer zweiten Sitzfläche zugeordneten zweiten Schließglied dichtend zur Anlage kommt und letzteres bei der weiteren Öffnungsbewegung gleichfalls in eine Offenstellung überführt wird, wobei das erste Schließglied an seinem Endabschnitt eine erste Dichtung aufweist, die radial gegenüber einer in der Verbindungsöffnung ausgebildeten zylindrischen ersten Sitzfläche abdichtet, wobei das zweite Schließglied an seinem dem ersten Schließglied zugewandten Ende eine Ausnehmung mit einer im wesentlichen zylindrischen, mit der zylindrischen ersten Sitzfläche fluchtenden Umfangswand besitzt, und die Ausnehmung so dimensioniert ist, um während der Öffnungsbewegung den Endabschnitt und die radiale erste Dichtung des ersten Schließgliedes dichtend aufzunehmen, bevor das zweite Schließglied öffnet, sowie mit weiteren Merkmalen nach dem Oberbegriff des Anspruchs 1.

### STAND DER TECHNIK

Der Prototyp eines Doppelsitzventils, das wesentliche Merkmale eines Doppelsitzveritils der gattungsgemäßen Art aufweist, ist aus der EP 0 039 319 B1 bekannt. Es handelt sich insbesondere um die Merkmale, dass das erste Schließglied an seinem Endabschnitt eine Dichtung aufweist, die radial gegenüber einer in der Verbindungsöffnung ausgebildeten zylindrischen ersten Sitzfläche abdichtet (Dichtung mit Gleiteingriff), wobei das zweite Schließglied an seinem dem ersten Schließglied 3 zugewandten Ende eine Ausnehmung mit einer im Wesentlichen zylindrischen, mit der zylindrischen ersten Sitzfläche fluchtenden Umfangswand besitzt, und die Ausnehmung so dimensioniert ist, um während der Öffnungsbewegung den Endabschnitt und die radiale Dichtung des ersten Schließgliedes dichtend aufzunehmen, bevor das zweite Schließglied öffnet. Das zweite Schließglied ist dabei als Sitzteller ausgebildet, dessen Dichtung rein axial auf die zugeordnete Sitzfläche wirkt (Dichtung mit Druckeingriff).

Das bekannte Doppelsitzventil gemäß EP 0 039 319 B1 erfährt seine Weiterentwicklung durch ein Doppelsitzventil der gattungsgemäßen Art, wie es aus der WO 98 54 494 A1 bekannt ist. Die Weiterentwicklung besteht darin, dass das Doppelsitzventil nunmehr über zwei sog. Sitzreinigungsstellungen verfügt, wobei die erste Sitzreinigungsstellung durch einen dem Öffnungshub entgegengerichteten ersten Teilhub erzeugt wird. In dieser Stellung bildet der leckageraumseitig am ersten Schließglied angeordnete zylindrische Ansatz mit der zugeordneten zylindrischen ersten Sitzfläche einen sog. Drosselspalt, über den die aus dem benachbarten ersten Ventilgehäuseteil herangeführte Reinigungsmittelmenge begrenzt werden kann. Die Sitzreinigungsstellung des zweiten Schließgliedes erfolgt durch einen dem Öffnungshub gleichgerichteten zweiten Teilhub, wobei in der Teiloffenstellung der leckageraumseitig am zweiten Schließglied angeordnete zylindrische Ansatz mit dem zugeordneten Teil der Verbindungsöffnung einen zweiten Drosselspalt bildet, der die in dieser Sitzreinigungsstellung erzeugte zweite Sitzreinigungsströmung mengenmäßig limitiert.

Bei diesem bekannten Doppelsitzventil wirkt, im Gegensatz zum Doppelsitzventil gemäß EP 0 039 319 B1**,** die Dichtung des als Sitzteller ausgebildeten zweiten Schließgliedes mit einem konusförmigen Abschnitt der zugeordneten Sitzfläche zusammen, sodass hier von einer axial/radial wirkenden Dichtung gesprochen werden kann (Dichtung mit Gleit-/Druckeingriff). Das zweite Schließglied wird auch an diesem konusförmigen Abschnitt geführt und zentriert. Wenn es die Dichtung zulässt, fungiert der konusförmige Abschnitt als fester (metallischer) Anschlag zur Endlagenbegrenzung des zweiten Schließgliedes in der Schließstellung des Doppelsitzventils.

Da die beiden Schließglieder und die zugeordneten zylindrischen Ansätze unterschiedliche Durchmesser aufweisen, sind die jeweils zugeordneten Abschnitte der Verbindungsöffnung ebenfalls im Durchmesser unterschiedlich, sodass zwischen diesen beiden Durchmessern eine Übergangsfläche zustande kommt. In der Sitzreinigungsstellung des ersten Schließgliedes strömt die erste Sitzreinigungsströmung an der zylindrischen ersten Sitzfläche entlang, überströmt den zwischen der Übergangsfläche und dem zylindrischen Ansatz am zweiten Schließglied gebildeten Ringspalt und setzt sich entlang der Umfangswand der zylindrischen Ausnehmung im zweiten Schließglied, die mit der zylindrischen Sitzfläche fluchtet, fort, wobei durch den Durchmesserunterschied der beiden Abschnitte der Verbindungsöffnung zumindest ein direktes Auftreffen der ersten Sitzreinigungsströmung auf den zweiten Drosselspalt und damit den Sitzbereich des zweiten Schließgliedes verhindert wird.

Die in der Sitzreinigungsstellung des ersten Schließgliedes an der zylindrischen Wand der ersten Sitzfläche und der sich anschließenden zylindrischen Umfangswand entlang geführte Sitzreinigungsströmung prallt gegen die stirnseitige Begrenzung der zylindrischen Ausnehmung, die vorzugsweise senkrecht zu den fluchtenden zylindrischen Flächen orientiert ist. Eine derartige rechtwinklige Umlenkung der Strömung ist insgesamt ungünstig, sie löst unkontrolliert von der Wandung ab und erzeugt Wirbel und Zirkulationsströmungen, die staudruckbildend sein können. Bei der bekannten Ausgestaltung bestimmen die Form und Abmessung der zylindrischen ersten Sitzfläche im Ventilgehäuse die Form und Abmessung der Ausnehmung im zweiten Schließglied im Bereich der Umfangswand. Dadurch bestehen nur eingeschränkte Möglichkeiten zur strömungstechnischen Ausgestaltung dieses die Sitzreinigungsströmung führenden und lenkenden Bereichs.

Bei der Sitzreinigungsstellung des zweiten Schließgliedes wird die zweite Sitzreinigungsströmung an der den Durchmesserunterschied zwischen den Abschnitten der Verbindungsöffnung überbrückenden Übergangsfläche radial nach innen umgelenkt und an der oberen stirnseitigen Begrenzungsfläche des ersten Schließgliedes vorbeigeführt. Auch in diesem Falle wird dadurch ein unmittelbares Auftreffen der zweiten Sitzreinigungsströmung auf den ersten Drosselspalt und damit den Sitzbereich des ersten Schließgliedes verhindert.

Mit dem bekannten Doppelsitzventil lässt sich, wie gewünscht, die Reinigungsmittelmenge bei der jeweiligen Sitzreinigung limitieren. Die Forderungen, die an ein derartiges Doppelsitzventil in bestimmten Ländern gestellt werden, sind jedoch weitergehend. So wird beispielsweise in den USA gefordert, dass bei größeren Dichtungsdefekten oder gar dem Verlust einer der beiden Sitzdichtungen im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, sodass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren, falls sie wirksam werden, eine Leckageströmung über den jeweiligen Drosselspalt und die defekte oder die gänzlich nicht mehr vorhandene Sitzdichtung.

Ein direktes Auftreffen der Sitzreinigungsströmung auf die den Leckagehohlraum begrenzenden Flächen ist daher in jedem Falle kontraproduktiv. Beim bekannten Doppelsitzventil kann die erste Sitzreinigungsströmung, die durch Anlüften des ersten Schließgliedes um den ersten Teilhub generiert wird, auf die stirnseitige Begrenzungsfläche der zylindrischen Ausnehmung im zweiten Schließglied mehr oder weniger lotrecht auftreffen. Die nunmehr notwendige rechtwinklige Umlenkung der Strömung löst, wie vorstehend bereits dargestellt, unkontrolliert von der Wandung ab und erzeugt Wirbel und Zirkulationsströmungen, die staudruckbildend sein können. Kritisch ist in diesem Zusammenhang eine diesbezügliche Staudruckbildung am Eingang des ringförmigen Spaltes zwischen der Übergangsfläche und der Stirnfläche des zylindrischen Ansatzes am zweiten Schließglied. Dieser relativ große Ringspalt ist beim bekannten Doppelsitzventil zwingend, da das zweite Schließglied nicht gleichermaßen in diesem Bereich und im Bereich der konischen Sitzfläche fest (metallisch) anliegen kann (Überbestimmung).

Bei der Sitzreinigung des zweiten Schließgliedes wird die diesbezügliche Sitzreinigungsströmung durch die kegelförmige Übergangsfläche auf die Stirnfläche des ersten Schließgliedes in unmittelbarer Nähe zum Ringspalt zwischen dem zylindrischen Ansatz am ersten Schließglied und der zylindrischen ersten Sitzfläche gerichtet. Dadurch ist an diesem Endabschnitt des ersten Schließgliedes eine Auftreffstelle für die Sitzreinigungsströmung gegeben und eine daraus ggf. resultierende Verzweigungsstromlinie kann dort einen Wirbel und einen Staudruck generieren, wenn sie einen Abzweig in den vorgenannten Ringspalt besitzt.

Es ist Aufgabe der vorliegenden Erfindung, ein Doppelsitzventil der gattungsgemäßen Art derart weiterzuentwickeln, dass eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des sitzreinigungsfähigen Doppelsitzventils gemäß der Erfindung sind in den Unteransprüchen beschrieben.

Die vorliegende Erfindung basiert auf den grundlegenden Merkmalen des bekannten Doppelsitzventils gemäß WO 98 54 494 A1 mit dem am jeweiligen Schließglied leckageraumseitig angeordneten zylindrischen Ansatz zur Bildung des jeweiligen Drosselspaltes. Darüber hinaus verwendet die vorliegende Erfindung den Durchmesserunterschied dieser zylindrischen Ansätze, der die Ausbildung einer Übergangsfläche zwischen den durchmesserunterschiedlichen Abschnitten der Verbindungsöffnung, die den zylindrischen Ansätzen zugeordnet sind, erlaubt.

Zur Lösung der der Erfindung zugrunde liegenden Aufgabe besteht ein erster erfinderischer Grundgedanke darin, die bei der jeweiligen Sitzreinigung aus dem zugeordneten Drosselspalt austretende Sitzreinigungsströmung möglichst verwirbelungs- und hindernisfrei in den Leckagehohlraum einzuleiten und von dort in gleicher Weise in die Umgebung abzuführen. Dies gelingt zum einen durch eine neue, die Sitzreinigungsströmungen im Leckagehohlraum führende und lenkende Strömungskontur. Diese neue Strömungskontur sorgt bei der Sitzreinigung des unten liegenden, ersten Schließgliedes dafür, dass die erste Sitzreinigungsströmung dem Wandverlauf im Bereich der ersten Sitzfläche ablösungsfrei folgt. Anschließend erfolgt in der mit der zylindrischen ersten Sitzfläche fluchtenden zylindrischen Ausnehmung des zweiten Schließgliedes eine stoßfreie Umlenkung dieser ersten Sitzreinigungsströmung, sodass letztere in eine zentrisch im ersten Schließglied angeordnete Ablaufbohrung gelangen kann, ohne mit den den Leckagehohlraum berandenden Bereichen staudruckbildend zu kollidieren. Dies wird dadurch erreicht, dass die Umfangswand der zylindrischen Ausnehmung an ihrem dem ersten Schließglied abgewandten Ende in eine rotationssymmetrische Umlenkfläche übergeht und diese Umlenkfläche in einer im Wesentlichen senkrecht zur Längsachse des zweiten Schließgliedes orientierten Stirnfläche der Ausnehmung ausmündet.

Wesentlich ist die stoßfreie Umlenkung der Sitzreinigungsströmung in der Umlenkfläche. Dies gelingt erfindungsgemäß dadurch, dass, im Meridianschnitt gesehen, die Umlenkfläche eine Kontur mit knickfreiem Verlauf aufweist, wobei ein Richtungsvektor im Ausmündungspunkt der Umlenkfläche in eine im ersten Schließglied angeordnete zentrische Ablaufbohrung weist, ohne mit dem ersten Schließglied im Bereich seiner dem Leckagehohlraum berandenden Bereiche staudruckbildend zu kollidieren. Es ist weiterhin wesentlich, dass die Umfangswand der zylindrischen Ausnehmung mit der Stirnfläche des zylindrischen Ansatzes am zweiten Schließglied eine zweite Umlaufkante ausbildet, die in der Schließstellung des zweiten Schließgliedes unmittelbar an die erste Sitzfläche angrenzt.

Ein zweiter erfinderischer Grundgedanke besteht darin, die Endlagenbegrenzung des zweiten Schließgliedes (Schieberkolben mit radial wirkender Dichtung im Gleiteingriff oder ggf. Sitzteller mit radial/axial wirkender Dichtung im Gleit-/Druckeingriff oder auch bedingt Sitzteller mit axial wirkender Dichtung im Druckeingriff) in dessen Schließstellung nicht an dem mit der Dichtung zusammenwirkenden Sitzbereich vorzunehmen, wie dies beim gattungsbildenden Doppelsitzventil gemäß WO 98 54 494 A1 der Fall ist, sondern den an sich wünschenswerten, jedoch nicht in allen Fällen realisierten oder realisierbaren festen (metallischen) Anschlag des zweiten Schießgliedes an das der Dichtung abgewandte Ende des zugeordneten Drosselspaltes zu verlagern. Dies gelingt erfindungsgemäß dadurch, dass das zweite Schließglied in seiner Schließstellung mit einer an einer Stirnfläche seines zylindrischen Ansatzes angeordneten Anschlagfläche, die mit der Umfangswand die zweite Umlaufkante ausbildet, an der Übergangsfläche anliegt, und zwar unmittelbar an die erste Sitzfläche angrenzend. Durch diese Maßnahme, die im Stand der Technik ohne Vorbild ist, wird der bislang vorhandene, an den Leckagehohlraum angrenzende Spalt zwischen der Stirnfläche des zylindrischen Ansatzes am zweiten Schließglied und dem hierzu korrespondierenden Ventilgehäuse, der an den Leckagehohlraum angrenzenden Übergangsfläche, beseitigt, wobei es sich in der Regel um einen metallischen Verschluss handelt. Über den hinter den sich berührenden Anschlagflächen vorhandenen Drosselspalt zwischen der Umfangsfläche des zylindrischen Ansatzes am zweiten Schließglied und der zylindrischen Ausnehmung im Ventilgehäuse kann nunmehr im Zuge der Sitzreinigung des ersten Schließgliedes kein Reinigungsmittel an die ggf. defekte oder ggf. gänzlich nicht mehr vorhandene zweite Sitzdichtung gelangen.

Ein derartiges Schließen dieses kritischen Spaltes war bislang nicht möglich, da durch die Anschlagfläche im Sitzbereich der zweiten Sitzdichtung eine Überbestimmung vorgelegen hätte. Wesentlich bei der Realisierung des zweiten erfinderischen Grundgedankens ist, dass sich die jeweilige Anschlagfläche am zweiten Schließglied und am Ventilgehäuse unmittelbar, vollständig umlaufend und, so weit dies bei festem bzw. metallischem Kontakt möglich ist, dicht am Leckagehohlraum berühren. Hierzu ist eine hinreichende zentrische Führung des zweiten Schließgliedes im Ventilgehäuse und eine hinreichende Zentrizität aller an dieser Führung beteiligten Bauteile des Doppelsitzventils erforderlich.

Um einer Verkantung des zweiten Schließgliedes im Zuge seiner Schließbewegung zusätzlich entgegen zu wirken, ist gemäß einer vorteilhaften Ausgestaltung der Endabschnitt des zweiten zylindrischen Ansatzes radial außenseits im Anschluss an die Anschlagfläche derart ausgestaltet, dass hier eine ringförmig umlaufende Zentrierstelle gebildet ist. Diese Zentrierstelle ist, in radialer Richtung gesehen, so weit wie möglich nach außen verlagert und so nah wie zulässig an den durch einen Ausrundungsradius bestimmten Verlauf der Übergangsfläche herangeführt. Dies wird durch eine ringförmig umlaufende zweite Anschrägung erreicht, die am Endabschnitt vorgesehen ist und die gegen die Anschlagfläche unter einem Anschrägungswinkel verläuft und die zusammen mit dem zweiten Durchmesser des zweiten zylindrischen Ansatzes eine durch Abrundung erzeugte, die Zentrierung in der Übergangsfläche sicherstellende dritte Umlaufkante bildet.

Bei der Strömungsführung der durch Anlüften des zweiten Schließgliedes generierten zweiten Sitzreinigungsströmung ist wesentlich, dass diese an einer durch die Übergangsfläche und die erste Sitzfläche gebildeten ersten Umlaufkante definiert ablöst und an den das erste Schließglied im Bereich des Leckagehohlraumes berandenden Flächen sicher tangential vorbeigeführt wird. Zu diesem Zweck ist zwischen der ersten Umlaufkante und den in Frage kommenden Bereichen des ersten Schließgliedes ein Sicherheitsabstand vorgesehen, der unter allen möglichen fertigungstechnischen Gegebenheiten ein diesbezügliches Auftreffen verhindert.

Der Sicherheitsabstand des ersten Schließgliedes vom Richtungsvektor an der Austrittsstelle der Übergangsfläche in die erste Sitzfläche wird vorteilhaft derart bemessen, dass dieser wenigstens so groß wie die Summe aller Fertigungstoleranzen der Bauteile des Doppelsitzventils ist, die in der Schließstellung des ersten Schließgliedes dessen geringsten axialen Abstand zur Übergangsfläche bestimmen.

Es hat sich weiterhin als günstig mit Blick auf eine Vermeidung jeglicher Staudruckbildung herausgestellt, wenn die von der Übergangsfläche und der ersten Sitzfläche gebildete erste Umlaufkante mit einer kleinstmöglichen ersten Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zulässig ist.

Gemäß einem weiteren Vorschlag bildet die ringförmige Ausnehmung im Gehäuse mit der Übergangsfläche einen stumpfen oder einen senkrechten ersten Umlenkwinkel, wobei der senkrechte Umlenkwinkel (90 Grad) bevorzugt wird, da hierdurch eine sichere, kollisionsfreie Überströmung des ersten Schließgliedes am ehesten sichergestellt ist. Der Übergang zwischen der Ausnehmung und der Übergangsfläche wird dabei vorteilhaft mit einem Ausrundungsradius gerundet.

Zur Erzielung eines glatten Überganges der radialen ersten Dichtung von der zylindrischen ersten Sitzfläche in die zylindrische Umfangswand der Ausnehmung im zweiten Schließglied wird weiterhin vorgeschlagen, dass die zylindrische Umfangswand in eine Einfahrschräge ausmündet und die Einfahrschräge mit der Anschlagfläche die zweite Umlaufkante ausbildet.

Um Staudruckbildung bei dem Eintritt der ersten Sitzreinigungsströmung in die Umlenkfläche im zweiten Schließglied zu vermeiden, sieht ein weiterer Vorschlag vor, dass die von der Anschlagfläche und der Umfangswand bzw. der Einfahrschräge gebildete zweite Umlaufkante mit einer kleinstmöglichen zweiten Eckenabrundung abgerundet ist. Ein scharfkantiger Übergang in diesem Bereich ist aus fertigungstechnischen und praktischen Gründen nicht zulässig, ein relativ großer Abrundungsradius ist kontraproduktiv und führt zur unerwünschten Staudruckbildung.

Um zu vermeiden, dass die erste Sitzreinigungsströmung nach Verlassen der Umlenkfläche die Stirnfläche der Ausnehmung staudruckbildend anströmt, ist weiterhin vorgesehen, dass die Umlenkfläche die Stirnfläche um einen axialen Hinterschneidungsabstand hinterschneidet. Dadurch kann die Kontur der Umlenkfläche im Bereich ihres Ausmündungspunktes derart um einen dritten Umlenkwinkel gegenüber der Stirnfläche der zylindrischen Ausnehmung angestellt werden, dass die erste Sitzreinigungsströmung leicht in Richtung zum zweiten Schließglied hin abgelenkt wird und dann dem Wandverlauf der angrenzenden Stirnfläche der zylindrischen Ausnehmung zum Zwecke der Reinigung derselben folgen kann. Es hat sich als zweckmäßig herausgestellt, wenn der dritte Umlenkwinkel im Bereich von 5 bis 20 Grad, bevorzugt mit 15 Grad ausgeführt ist.

Im Sinne einer optimalen Strömungsführung der ersten Sitzreinigungsströmung hat sich eine Kontur bewährt, die eine Abfolge von Abschnitten aufweist, wobei der erste Abschnitt und der aus der Stirnfläche ausmündende dritte und letzte Abschnitt jeweils geradlinig ausgeführt sind, und wobei diese Abschnitte über den zweiten Abschnitt, der letztere tangential mit einem größtmöglichen Umlenkradius abrundet, miteinander verbunden sind.

Ein in gleicher Weise befriedigendes Strömungsergebnis wird gemäß einem weiteren Vorschlag dadurch erreicht, dass sich die Kontur aus einer Abfolge gekrümmter Abschnitte zusammensetzt, die an ihren jeweiligen Übergangsstellen jeweils eine gemeinsame Tangente besitzen. Eine andere Ausführungsform sieht vor, dass die Kontur aus einem einzigen Abschnitt kontinuierlich veränderter Krümmungen besteht. Schließlich wird auch vorgeschlagen, dass die Kontur aus einem einzigen Abschnitt mit konstanter Krümmung gebildet ist.

Um unter allen Druck- und Geschwindigkeitsbedingungen eine einwandfreie und störungsfreie Ableitung des Reinigungsmittels sicherzustellen, ist vorgesehen, dass die Ablaufbohrung über mehrere über den Umfang verteilte Verbindungsbohrungen den Leckagehohlraum mit der Umgebung des Doppelsitzventils verbindet, und dass die dem Leckagehohlraum zugewandte stirnseitige Begrenzung des ersten Schließgliedes eine allseits umfängliche, zur Ablaufbohrung hin abfallende Anschrägung aufweist.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im übrigen Leckagehohlraum, so weit dies konstruktiv möglich ist, verzichtet wird. Diesbezüglich sieht daher ein weiterer Vorschlag vor, dass die Ablaufbohrung den Leckagehohlraum mit der Umgebung des Doppelsitzventils verbindet, und dass die dem Leckagehohlraum zugewandte stirnseitige Begrenzung des ersten Schließgliedes eine allseits umfänglich zur Ablaufbohrung hin abfallende Anschrägung aufweist. Bei dieser Ausführung durchdringt eine mit dem ersten Schließglied verbundene erste Verstellstange eine mit dem zweiten Schließglied verbundene, als Hohlstange ausgeführte zweite Verstellstange konzentrisch, setzt sich fliegend durch die Ablaufbohrung hindurch fort und ist an einem dem zweiten Schließglied abgewandten Ende des ersten Schließgliedes mit letzterem über wenigstens eine im Wesentlichen radial orientierte Traverse fest verbunden. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

Die vorgenannte Anschrägung der dem Leckagehohlraum zugewandten Stirnfläche des ersten Schließgliedes ist zweckmäßig als Kegelmantelfläche ausgeführt, die gegenüber der Grundfläche des Kegels im Bereich von 10 bis 20 Grad, bevorzugt 15 Grad geneigt ist.

In diesem Zusammenhang wird weiterhin vorgeschlagen, dass drei über den Umfang gleichmäßig verteilt angeordnete Traversen fest an einem Verstellstangenabschnitt vorgesehen sind, die jeweils radial außenseits fest mit einem umlaufenden Ring verbunden sind, und dass der Verstellstangenabschnitt, die Traversen und der Ring einen einstückigen Anschweißteil bilden.

Dabei ist es weiterhin vorteilhaft, wenn sich der Anschweißteil außenseits über den Ring an einen einen leckagehohlraumfernen Abschnitt der Ablaufbohrung begrenzenden Druckausgleichskolben und innenseits über den Verstellstangenabschnitt an die erste Verstellstange anschließt und wenn der Ring in seinem Innendurchmesser derart gegenüber dem Durchmesser der Ablaufbohrung unter Zwischenschaltung eines konisch sich erweiternden Übergangsbereichs vergrößert ist, dass der Innendurchgang der Ablaufbohrung durch die Traversen nicht geschmälert ist.

Da durch den zweiten erfinderischen Grundgedanken die bislang im Stand der Technik notwendige feste (metallische) Anschlagfläche im Sitzbereich des zweiten Schließgliedes entfällt, ergeben sich nunmehr in diesem Bereich gegenüber bekannten Lösungen mehr Freiheitsgrade für die Ausgestaltung des zweiten Schließgliedes. Prinzipiell können in diesem Bereich rein radial, radial/axial und, bedingt möglich, auch rein axial wirkende zweite Dichtungen vorgesehen werden.

In diesem Zusammenhang sieht die Erfindung gemäß einer ersten Ausgestaltung vor, dass die zweite Sitzfläche zylindrisch ausgeführt und durch die ringförmige Ausnehmung gebildet ist, dass das zweite Schließglied eine zweite Dichtung aufweist, die radial gegenüber der zweiten Sitzfläche im Gleiteingriff abdichtet. Um das Einfahren der zweiten Dichtung in die zweite Sitzfläche zu erleichtern, ist diesbezüglich vorgesehen, dass die zweite Sitzfläche eine zum zweiten Schließglied hin sich erweiternde abgeschrägte Kante zur Erzielung eines glatten Überganges der radialen zweiten Dichtung aufweist. Diese abgeschrägte Kante ist gegenüber der zweiten Sitzfläche um einen Anstellwinkel, bevorzugt im Bereich 7,5 bis 15 Grad, bevorzugt mit 10 Grad angestellt.

Da die zweite Dichtung beim Ausfahren aus der abgeschrägten Kante eine elastische Rückverformung erfährt, die sich derart auswirkt, dass sie länger im strömungsbehindemden Kontakt mit der abgeschrägten Kante verbleibt, als dies wünschenswert ist, sieht ein weiterer Vorschlag vor, dass sich die abgeschrägte Kante an ihrem dem zweiten Schließglied zugewandten Ende in eine Öffnungsschräge erweitert, wobei letztere gegenüber der zweiten Sitzfläche um einen Öffnungswinkel, bevorzugt im Bereich 35 bis 55 Grad, bevorzugt mit 45 Grad angestellt ist. Dadurch wird im Bereich dieser abgeschrägten Kante eine wünschenswerte Querschnittserweiterung geschaffen, sodass der zur Sicherstellung einer unbehinderten zweiten Sitzreinigungsströmung erforderliche zweite Teilhub reduziert werden kann.

Eine die zweite Sitzfläche betreffende zweite Ausgestaltung sieht vor, dass die zweite Sitzfläche kegelförmig ausgeführt und gegenüber der zylindrischen Ausnehmung um einen Sitzwinkel geneigt ist, und dass das zweite Schließglied eine zweite Dichtung aufweist, die axial/radial gegenüber der zweiten Sitzfläche im Gleit-/Druckeingriff abdichtet. Der Sitzwinkel wird hierbei im Bereich zwischen 25 und 35 Grad, bevorzugt mit 30 Grad ausgeführt. Auch hier ist zur Reduzierung des die zweite Sitzreinigungsströmung sicherstellenden zweiten Teilhubes vorgesehen, dass sich die zweite Sitzfläche an ihrem den zweiten Schließglied zugewandten Ende in eine Öffnungsschräge erweitert, wobei letztere gegenüber der zylindrischen Ausnehmung um einen vorstehend bereits quantifizierten Öffnungswinkel angestellt ist.

Gemäß einer dritten Ausgestaltung wird vorgeschlagen, dass die zweite Sitzfläche senkrecht zur Längsachse des Doppelsitzventils angeordnet ist, und dass das zweite Schließglied eine zweite Dichtung aufweist, die axial gegenüber der zweiten Sitzfläche im Druckeingriff abdichtet. Eine derartige Lösung mit den Vorteilen einer rein axial wirkenden Dichtung und eines rein axial wirkenden Sitztellers ist allerdings nur dann möglich, wenn die Dichtung derart duktil beschaffen ist, dass die feste und ggf. metallische Anlage des zweiten Schließgliedes mit seiner Anschlagfläche allein an der Übergangsfläche unter allen Bedingungen sichergestellt ist.

### KURZBESCHREIBUNG DER ZEICHNUNGEN

Ausführungsbeispiele des vorgeschlagene sitzreinigungsfähigen Doppelsitzventils gemäß der Erfindung sind in der Zeichnung dargestellt und werden nachfolgend nach Aufbau und Funktion beschrieben. Es zeigen
- **Figur 1**: im Längs- und Ausschnitt das erfindungsgemäße sitzreini- gungsfähige Doppelsitzventil in seinem Sitzbereich, wobei des- sen Schließstellung dargestellt ist;
- **Figur 2**: im Längs- und Ausschnitt eine vergrößerte Darstellung des Sitzbereichs des Doppelsitzventils gemäß **Figur 1**;
- **Figur 2a**: in vergrößerter Darstellung einen in **Figur 2** als Einzelheit "**X**" dargestellten Ausschnitt aus dem Sitzbereich;
- **Figur 3**: im Längs- und Ausschnitt den Sitzbereich und die beiden Schließglieder des Doppelsitzventils gemäß **Figur 2**, wobei die Offenstellung des Doppelsitzventils dargestellt ist;
- **Figur 4**: im Längs- und Ausschnitt das Doppelsitzventil gemäß **Figur 2**, wobei sich das unabhängig angetriebene, unten liegende, als Schieberkolben ausgebildete erste Schließglied in seiner Sitz- reinigungsstellung befindet;
- **Figur 5**: im Längs- und Ausschnitt das Doppelsitzventil gemäß **Figur 2**, wobei sich das abhängig angetriebene, oben liegende, als Sitz- teller ausgebildete zweite Schließglied in seiner Sitzreini- gungsstellung befindet;
- **Figur 6a**: in perspektivischer Darstellung einen einstückigen Anschweiß- teil, bestehend aus drei einen Verstellstangenabschnitt mit ei- nem Ring jeweils fest verbindenden Traversen, zur Verbindung der ersten Ventilstange mit einem am leckagehohlraumfernen Ende des ersten Schließgliedes angeordneten Druckaus- gleichskolben und
- **Figur 6b**: im Meridianschnitt die Verbundkonstruktion aus erstem Schließglied und mittelbar angrenzendem Druckausgleichskol- ben, Anschweißteil und erste Verstellstange.

### DETAILLIERTE BESCHREIBUNG

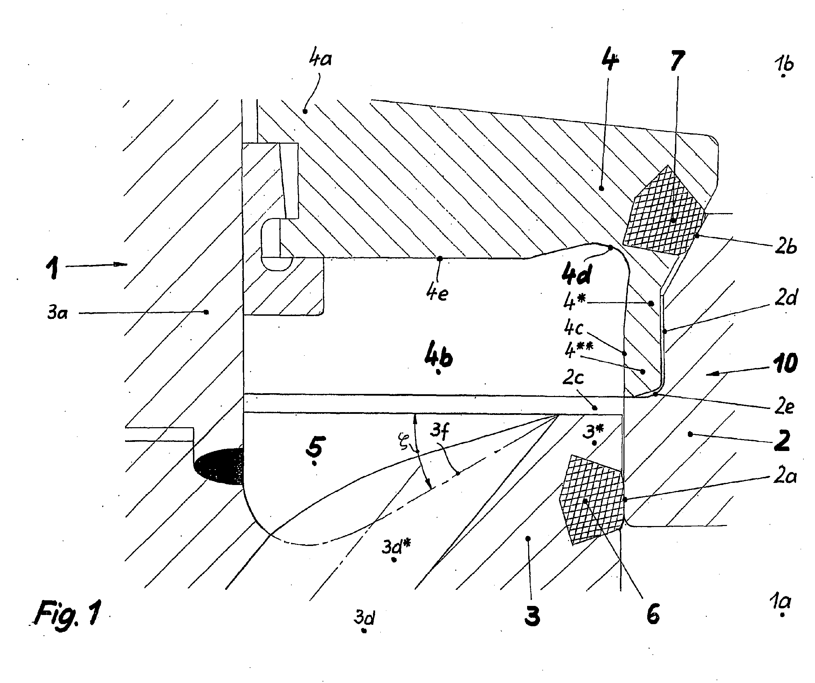

Das erfindungsgemäße Doppelsitzventil 1 (**Figur 1**) besteht im Wesentlichen aus dem Ventilgehäuse 10 mit einem ersten und einem zweiten Ventilgehäuseteil 1a bzw. 1b, den zwei unabhängig voneinander bewegbaren Schließgliedern 3 und 4 mit den jeweils zugeordneten Verstellstangen 3a bzw. 4a und einem Sitzring 2, der über eine innenseitige Verbindungsöffnung 2c eine Verbindung zwischen den Ventilgehäuseteilen 1a, 1b herstellt.

Das als Schieberkolben ausgebildete erste Schließglied 3 (aktives Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung im Gleiteingriff). Das als Sitzteller ausgebildete zweite Schließglied 4 wirkt in der Schließstellung des Doppelsitzventils 1 mit einer kegelförmigen zweiten Sitzfläche 2b zusammen, die zum ersten Schließglied 3 hin in eine im Wesentlichen zylindrische ringförmige Ausnehmung 2d ausmündet. Die Abdichtung erfolgt über eine zweite Dichtung 7, die axial/radial gegenüber der zweiten Sitzfläche 2b im Gleit-/Druckeingriff abdichtet.

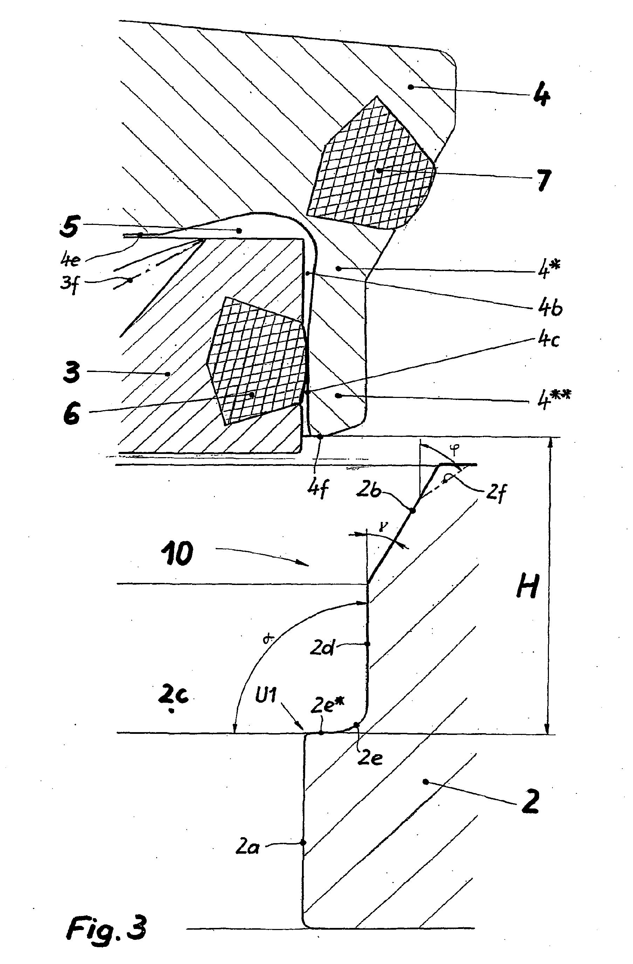

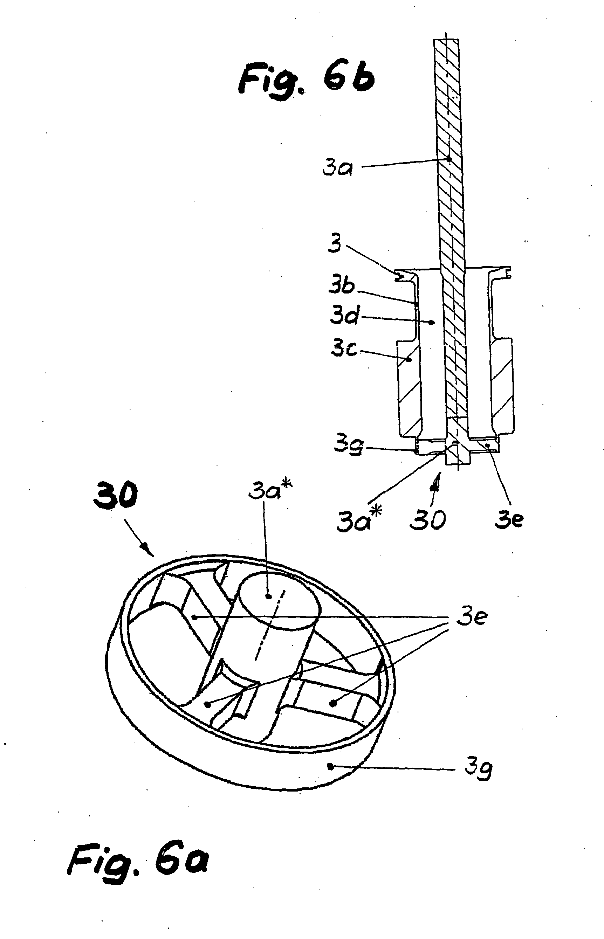

Die beiden Schließglieder 3, 4 bilden sowohl in der dargestellten Schließ- als auch in einer Offenstellung (Figur 3) zwischen sich einen Leckagehohlraum 5, der über eine nicht dargestellte Ablaufbohrung 3d, die einen sich an das erste Schließglied 3 anschließenden Verbindungsteil 3b und einen sich an letzterem fortsetzenden Druckausgleichskolben 3c jeweils zentrisch durchdringt, mit der Umgebung des Doppelsitzventils 1 verbunden ist (siehe auch **Figur 6b**).

In der Regel ist, wie dies **Figur 1** zeigt, die erste Verstellstange 3a im Bereich des ersten Schließgliedes 3 mit letzterem über mehrere die Ablaufbohrung 3d sternförmig und in radialer Richtung durchsetzende Stege fest verbunden. Im vorliegenden Falle sind diese Stege zwischen Verbindungsbohrungen 3d* gebildet, die über den Umfang verteilt das Schließglied 3 durchdringen und die Ablaufbohrung 3d mit dem Leckagehohlraum 5 verbinden. Da diese Stege zwischen den Verbindungsbohrungen 3d* negative Rückwirkungen auf die Strömungsverhältnisse und das Strömungsbild im Leckagehohlraum 5 haben können, ist gemäß einer vorteilhaften Ausführungsform bei dem erfindungsgemäßen Doppelsitzventil 1 vorgesehen, diese mechanisch notwendigen Verbindungsstellen in Form von drei über den Umfang gleichmäßig verteilt angeordnete Traversen 3e ein Stück weit vom Leckagehohlraum 5 entfernt, vorzugsweise an das dem ersten Schließglied 3 abgewandte Ende des Druckausgleichskolbens 3c hin, zu verlagern (**Figur 6b**). Die feste Verbindung mit letzterem erfolgt über einen umlaufenden Ring 3g, mit dem die Traversen 3e radial außenseits fest verbunden sind. Zweckmäßig sind die Traversen 3e, der Ring 3g und ein Verstellstangenabschnitt 3a* in einem einstückigen Anschweißteil 30 zusammengefasst (**Figur 6a**).

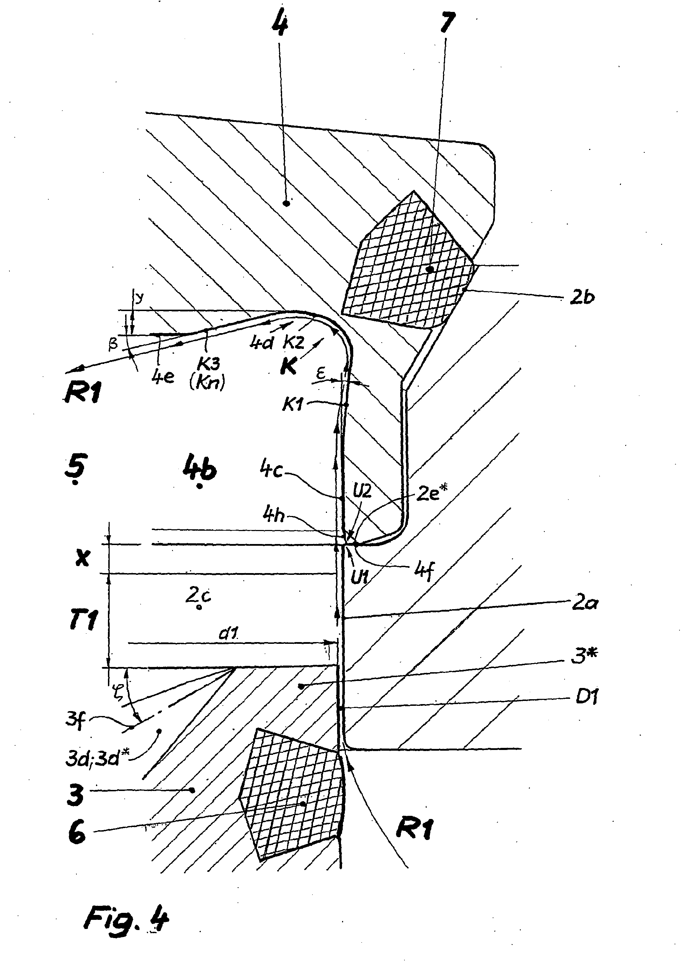

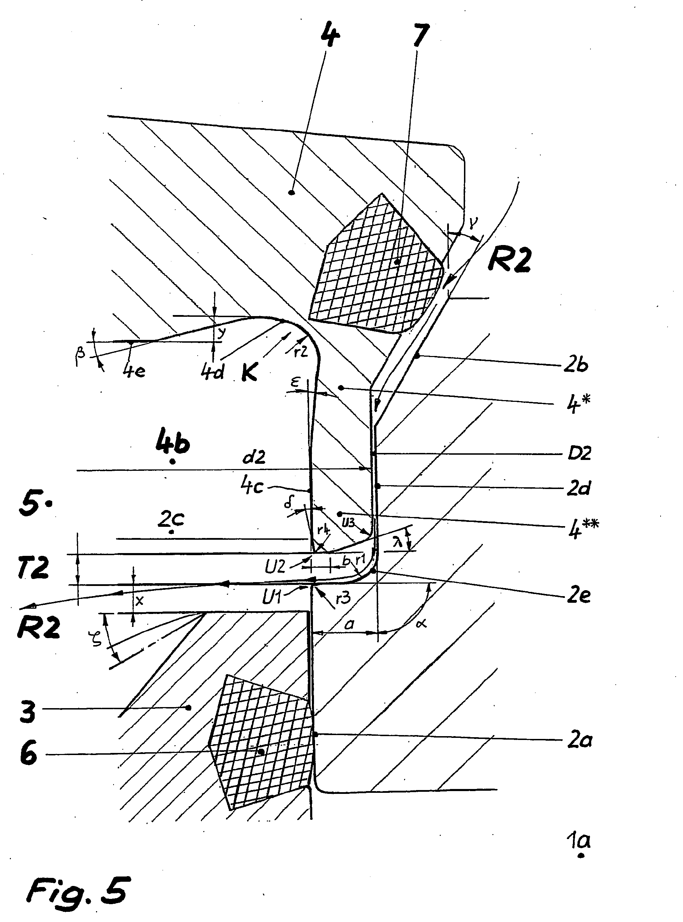

Jedes Schließglied 3, 4 weist leckageraumseitig einen zylindrischen Ansatz 3* bzw. 4* auf, der mit dem zugeordneten Teil der Verbindungsöffnung 2c im Sitzring 2 einen ringförmigen ersten Drosselspalt D1 (siehe auch **Figur 4**) bzw. einen ringförmigen zweiten Drosselspalt D2 (siehe auch **Figur 5**) bildet.

Das zweite Schließglied 4 besitzt an seinem dem ersten Schließglied 3 zugewandten Ende eine Ausnehmung 4b mit einer im Wesentlichen zylindrischen, mit der zylindrischen ersten Sitzfläche 2a fluchtenden Umfangswand 4c (**Figur 1**). Diese Umfangswand 4c ist dabei so dimensioniert, dass sie während der Öffnungsbewegung den Endabschnitt 3* und die radiale erste Dichtung 6 des ersten Schließgliedes 3 dichtend aufnimmt, bevor das zweite Schließglied 4 öffnet.

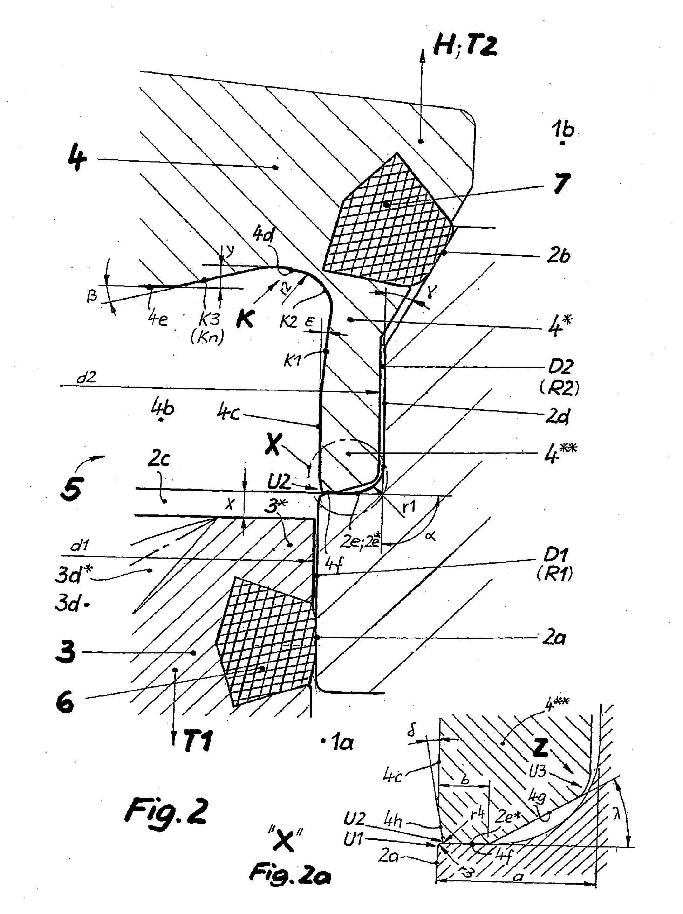

Die **Figuren 2** bis **5** verdeutlichen in Verbindung mit **Figur 1** Einzelheiten des Sitzbereichs für das Doppeisitzventil 1. Das erste Schließglied 3 bildet mit seinem zylindrischen Ansatz 3* (**Figur 2**; **Figur 4**), der einen ersten Durchmesser d1 aufweist, und mit der zugeordneten ersten Sitzfläche 2a der Verbindungsöffnung 2c den ersten Drosselspalt D1. Das zweite Schließglied 4 formt in gleicher Weise mit seinem zweiten zylindrischen Ansatz 4* (**Figur 1****;** **Figur 5**), der einen zweiten Durchmesser d2 aufweist, zusammen mit der ringförmigen, zylindrischen Ausnehmung 2d in der Verbindungsöffnung 2c den zweiten Drosselspalt D2.

Der halbe Durchmesserunterschied zwischen der ringförmigen Ausnehmung 2d und der ersten Sitzfläche 2a (**Figur 5****;** **Figur 2** und **1**) ist mit a gekennzeichnet. In diesem radialen Erstreckungsbereich a ist die Übergangsfläche 2e zwischen der ersten Sitzfläche 2a und der ringförmigen Ausnehmung 2d vorgesehen, wobei der in die erste Sitzfläche 2a ausmündende Endabschnitt der Übergangsfläche 2e mit der zylindrischen Mantelfläche der ringförmigen Ausnehmung 2d einen vorzugsweise senkrechten ersten Umlenkwinkel α bildet. Dabei weist die ringförmige Ausnehmung 2d in der Verbindungsöffnung 2c einen mit einem Ausrundungsradius r1 ausgeführten gerundeten Übergang zur Übergangsfläche 2e auf, wobei der Ausrundungsradius r1 mit r1 < a ausgeführt ist. Die radiale Breite a wird so groß ausgeführt, dass eine in der Sitzreinigungsstellung des zweiten Schließgliedes 4 aus dem zweiten Drosselspalt D2 in den Leckagehohlraum 5 austretende zweite Sitzreinigungsströmung R2 (**Figur 5**) an der Übergangsfläche 2e zum Zentrum des Leckagehohlraumes 5 hin und sicher über das erste Schließglied 3 hinweg umgelenkt wird. Um sicherzustellen, dass die zweite Sitzreinigungsströmung R2 nicht vorzeitig in Richtung des ersten Schließgliedes 3 abgelenkt wird, ist eine von der Übergangsfläche 2e und der ersten Sitzfläche 2a gebildete erste Umlaufkante U1 mit einer kleinstmöglichen ersten Eckenabrundung r3 abgerundet, wodurch an dieser Stelle eine definierte Strömungsabrissstelle entsteht.

Durch diese Maßnahme wird sichergestellt, dass die aus dem zweiten Drosselspalt D2 austretende zweite Sitzreinigungsströmung R2 nicht auf den Sitzbereich der ersten Dichtung 6 gerichtet ist. Darüber hinaus muss die radiale Breite a der Übergangsfläche 2e auch die Realisierung einer ventilgehäuseseitigen Anschlagfläche 2e* (**Figur 2; Figur 2a**) für das zweite Schließglied 4 sicherstellen, damit der zweite erfinderische Grundgedanke, nämlich ein dem Leckagehohlraum 5 unmittelbar benachbarter fester (metallischer) Anschlag des zweiten Schließgliedes 4 am Sitzring 2, zu verwirklichen ist. Die ventilgehäuseseitige Anschlagfläche 2e* korrespondiert mit einer an der Stirnseite eines Endabschnittes 4** des zweiten zylindrischen Ansatzes 4* vorgesehenen Anschlagfläche 4f (siehe **Figur 2a**), die, in radialer Richtung gesehen, eine Breite b aufweist. Die ventilgehäuseseitige Anschlagfläche 2e* und die schließgliedseitige Anschlagfläche 4f sind jeweils geradlinig ausgeführt; der Ausrundungsradius r1 der Übergangsfläche 2e schließt sich tangential an die ventilgehäuseseitige Anschlagfläche 2e* an.

Die Umfangswand 4c der zylindrischen Ausnehmung 4b im zweiten Schließglied 4 geht an ihrem dem ersten Schließglied 3 abgewandten Ende in eine rotationssymmetrische Umlenkfläche 4d über (Anfangspunkt einer Kontur (K)) (**Figur 2**), und diese Umlenkfläche 4d mündet in einer im Wesentlichen senkrecht zur Längsachse des zweiten Schließgliedes 4 orientierten Stirnfläche 4e der Ausnehmung 4b mit einem dritten Umlenkwinkel β aus. Eine von der Umfangswand 4c und der Anschlagfläche 4f gebildete zweite Umlaufkante U2 grenzt in der Schließstellung des zweiten Schließgliedes 4 (**Figuren 2a**) unmittelbar an die erste Sitzfläche 2a an. Im Meridianschnitt gesehen weist die Umlenkfläche 4d eine Kontur K mit knickfreiem Verlauf auf, wobei sich ein an die Umfangswand 4c angrenzender erster Abschnitt K1 der Kontur K über weitere Abschnitte K2 und K3 fortsetzt (**Figur 2**) und der Richtungsvektor im Endpunkt des letzten Abschnitts K3 bzw. Kn in die zentrisch im ersten Schließglied 3 angeordnete Ablaufbohrung 3d bzw. die Verbindungsbohrungen 3d* weist, ohne mit dem ersten Schließglied 3 im Bereich seiner den Leckagehohlraum 5 berandenden Bereiche zu kollidieren.

Damit eine erste Sitzreinigungsströmung R1 möglichst tangential, ohne staudruckbildend wirksam zu werden, an der Stirnfläche 4e der Ausnehmung 4b entlanggeführt werden kann (**Figur 4**), hinterschneidet die Umlenkfläche 4d die Stirnfläche 4e um einen axialen Hinterschneidungsabstand y. Eine dem Leckagehohlraum 5 zugewandte stirnseitige Begrenzung des ersten Schließgliedes 3 besitzt einen axialen Sicherheitsabstand x vom Richtungsvektor an der Austrittsstelle der Übergangsfläche 2e in die erste Sitzfläche 2a, die als vorstehend erwähnte erste Umlaufkante U1 ausgebildet ist (**Figuren 2** und **5**).

In der Offenstellung des Doppelsitzventils (**Figur 3**), wenn ein voller Öffnungshub H realisiert ist, wird deutlich, dass die an der Umfangswand 4c der Ausnehmung 4b radial wirkende erste Dichtung 6 für eine sichere Abdichtung der beiden Schließglieder 3, 4 zwischen dem Ventilgehäuse 10 einerseits und dem Leckagehohlraum 5 andererseits sorgt.

Die **Figuren 2** und **2a** verdeutlichen, dass die zylindrische Umfangswand 4c an ihrem dem ersten Schließglied 3 zugewandten Ende mit einer Einfahrschräge 4h beginnt, die bevorzugt mit einem Anstellwinkel δ im Bereich von 5 bis 15 Grad und hier wiederum bevorzugt mit 15 Grad ausgeführt ist, und dass die Umfangswand 4c an ihrem anderen Ende in den ersten Abschnitt K1 übergeht. Letzterer ist unter einem zweiten Umlenkwinkel ε gegenüber der Umfangswand 4c radial nach außen angewinkelt, wobei dieser Umlenkwinkel ε weniger als 15 Grad beträgt.

Weiterhin ist in den **Figuren 1** bis **5** gezeigt, dass die Stirnfläche des ersten Schließgliedes 3 zur Ablaufbohrung 3d hin mit einer abfallenden, konischen Anschrägung 3f versehen ist, wobei letztere bevorzugt als Kegelmantelfläche ausgeführt und diese gegenüber der Grundfläche des Kegels um einen Neigungswin kel ζ geneigt ist. Dieser Neigungswinkel ζ wird bevorzugt im Bereich 10 bis 20 Grad und hier wiederum bevorzugt mit ζ = 15 Grad ausgeführt.

Die nach Vollzug eines ersten Teilhubes T1 aus dem ersten Drosselspalt D1 (**Figur 4**) im Zuge der Sitzreinigung des ersten Schließgliedes 3 austretende erste Sitzreinigungsströmung R1 strömt zunächst senkrecht an der ersten Sitzfläche 2a entlang, überbrückt die Einfahrschräge 4h ohne abzulösen, folgt der Umfangswand 4c und dem sich anschließenden, unter dem zweiten Umlenkwinkel ε abgewinkelten ersten Abschnitt K1 ebenfalls ohne abzulösen und tritt stoßfrei in den weiteren Verlauf der Umlenkfläche 4d mit ihren nachfolgenden Abschnitten K2 und K3 ein, wird dort entsprechend der Kontur K umgelenkt, verlässt den dritten und letzten Abschnitt K3 (K3 = Kn) mit dem dritten Umlenkwinkel β, legt sich weitgehend tangential an die Stirnfläche 4e an und gelangt schließlich in den Bereich der Ablaufbohrung 3d bzw. die Verbindungsbohrungen 3d*.

In den **Figuren 2** und **4** ist die Kontur K mit knickfreiem Verlauf im Einzelnen detailliert bezeichnet. Der erste Abschnitt K1 und der aus der Stirnfläche 4e ausmündende dritte und letzte Abschnitt K3 (K3 = Kn) sind jeweils geradlinig ausgeführt und diese Abschnitte K1 und K3 sind über einen zweiten Abschnitt K2, der letztere tangential mit einem größtmöglichen Umlenkradius r2 abrundet, miteinander verbunden.

Damit die erste Sitzreinigungsströmung R1 (**Figur 4**) an der zweiten Umlaufkante U2 keinen Staudruck ausbilden kann, grenzt letztere in der Schließstellung des zweiten Schließgliedes 4 unmittelbar an die erste Sitzfläche 2a an und ist mit der kleinstmöglichen zweiten Eckenabrundung r4 abgerundet (siehe auch **Figur 2a**).

Eine weitere Ausformung der Umlenkfläche 4d sieht vor, dass die Kontur K aus einer Abfolge gekrümmter Abschnitte K1 bis Kn besteht (z.B. Kreisbogen, Ellipsen, Parabeln, Hyperbeln), die an ihren jeweiligen Übergangsstellen jeweils eine gemeinsame Tangente besitzen. Gemäß einer anderen Ausgestaltung ist die Kontur K aus einem einzigen Abschnitt kontinuierlich veränderter Krümmung gebildet (z.B. Spirale oder ein anderer mathematisch geschlossen beschreibbarer Kurvenverlauf). Die Kontur K ist nach einem weiteren Vorschlag mit einem einzigen Abschnitt mit konstanter Krümmung ausgeführt (z.B. ein einziger Kreisbogen mit dem erforderlichen tangentialen Ein- und Austritt unter dem zweiten Umlenkwinkel ε bzw. dem dritten Umlenkwinkel β).

Der Endabschnitt 4** des zweiten zylindrischen Ansatzes 4* (**Figuren 2** und **2a**) weist stirnseitig radial außenseits im Anschluss an die Anschlagfläche 4f eine ringförmig umlaufende zweite Anschrägung 4g auf, die gegen die Anschlagfläche 4f unter einem Anschrägungswinkel λ verläuft. Der von der zweiten Anschrägung 4g und der Mantelfläche des zweiten zylindrischen Ansatzes 4* am zweiten Durchmesser d2 gebildete umlaufende Durchdringungsbereich ist in Form einer abgerundeten dritten Umlaufkante U3 ausgebildet. Der Anschrägungswinkel λ ist derart bemessen, dass die dritte Umlaufkante U3, in radialer Richtung gesehen, so weit wie möglich nach außen verlagert und so nah wie zulässig an den durch den Ausrundungsradius r1 bestimmten Verlauf der Übergangsfläche 2e herangeführt ist und dort mit letzterer eine ringförmig umlaufende Zentrierstelle Z bildet. Dadurch ist das zweite Schließglied 4 kurz vor dem Einfahren in seine Anschlagposition in jedem Falle derart hinreichend koaxial zentriert, dass die erste und die zweite Umlaufkante U1, U2 in der notwendigen Weise korrespondieren, auch wenn ein unplanmäßiges Verkanten des zweiten Schließgliedes 4 aufgrund mangelhafter Führung an den hierfür planmäßig vorgesehenen Führungsstellen einmal auftreten sollte.

Das leckageraumseitige Ende des in Figur 5 bezeichneten zweiten Drosselspaltes D2 ist durch die vorstehend beschriebene Anschlagposition (s. **Figur 4**) des zweiten Schließgliedes 4 an der ventilgehäuseseitigen Anschlagfläche 2e* weitestgehend dicht verschlossen (so weit dies beispielsweise bei einer Anlage Metall gegen Metall grundsätzlich möglich ist). Reinigungsflüssigkeit der ersten Sitzreinigungsströmung R1 kann nicht mehr in den zweiten Drosselspalt D2 und damit in den Bereich der zweiten Dichtung 7 eintreten. Selbst bei ggf. stark beschädigter oder ggf. gänzlich entfernter zweiter Dichtung 7 ist daher kein Durchtritt für Reinigungsflüssigkeit mehr gegeben.

Gemäß **Figur 5** nimmt das zweite Schließglied 4 nach Vollzug eines zweiten Teilhubes T2 seine zweite Sitzreinigungsstellung ein. Die zweite Dichtung 7 ist dabei spaltweit von der zweiten Sitzfläche 2b entfernt, und der zweite zylindrische Ansatz 4* bildet zusammen mit der ringförmigen Ausnehmung 2d den zweiten Drosselspalt D2, durch den die zweite Sitzreinigungsströmung R2 an die nunmehr überströmbare, freigelegte zweite Sitzfläche 2b herangeführt und in den Leckagehohlraum 5 eingeleitet werden kann. Die zweite Sitzfläche 2b ist konusförmig bzw. kegelförmig ausgeführt und das zweite Schließglied 4 weist die zweite Dichtung 7 auf, die ausweislich der **Figur 2** (Schließstellung) axial/radial gegenüber der zweiten Sitzfläche 2b im Gleit-/Druckeingriff abdichtet. Die konus- bzw. kegelförmig ausgeführte zweite Sitzfläche 2b ist gegenüber der zylindrischen Ausnehmung 2d um einen Sitzwinkel γ geneigt, der im Bereich 25 bis 35 Grad, bevorzugt mit 30 Grad ausgeführt ist. Eine Öffnungsschräge 2f (s. **Figur 3**) für die zweite Dichtung 7 ist in diesem Falle nicht erforderlich; sie kann jedoch an dem dem zweiten Schließglied 4 zugewandten Ende der zweiten Sitzfläche 2b vorgesehen werden. Die Öffnungsschräge 2f ist dann gegenüber der zylindrischen Ausnehmung 2d um einen Öffnungswinkel ϕ im Bereich 35 bis 55 Grad, bevorzugt mit ϕ = 45 Grad angestellt.

Eine vorteilhafte Ausgestaltung im Bereich der zweiten Sitzfläche 2b sieht vor, letztere zylindrisch auszuführen, wobei sie unmittelbar durch die ringförmige Ausnehmung 2d gebildet ist. Diese Ausführungsform stellt in herausragender Weise sicher, dass das zweite Schließglied 4 in seiner Schließstellung mit der an der Stirnfläche seines zylindrischen Ansatzes 4* angeordneten Anschlagfläche 4f allein an der Übergangsfläche 2e bzw. der ventilgehäuseseitigen Anschlagfläche 2e* anliegt. Falls die zweite Sitzfläche 2b zylindrisch ausgeführt ist, dichtet die zweite Dichtung 7 dort radial im Gleiteingriff ab.

Wird die zweite Sitzfläche 2b zylindrisch ausgeführt (in den Figuren nicht dargestellt), dann ist eine dichtungsschonende Einfahrschräge in diese zylindrische Sitzfläche besonders vorteilhaft. Diese Einfahrschräge wird zweckmäßig in Form einer sich zum zweiten Schließglied 4 hin erweiternden abgeschrägten Kante zur Erzielung eines glatten Überganges der radialen zweiten Dichtung 7 ausgeführt. Die abgeschrägte Kante ist gegenüber der zweiten Sitzfläche um einen Anstellwinkel im Bereich 7,5 bis 15 Grad, bevorzugt mit 10 Grad angestellt. Um den zur Freilegung der zylindrischen zweiten Sitzfläche 2b notwendigen zweiten Teilhub T2 zu reduzieren, erweitert sich die abgeschrägte Kante gemäß einem weiteren Vorschlag an ihrem dem zweiten Schließglied 4 zugewandten Ende in eine Öffnungsschräge 2f (analog zur Ausführung gemäß Figur 2), wobei letztere gegenüber der zweiten Sitzfläche 2b um einen Öffnungswinkel ϕ, bevorzugt im Bereich 35 bis 55 Grad und hier wiederum bevorzugt mit ϕ = 45 Grad angestellt ist.

Das erfindungsgemäße Doppelsitzventil 1 erlaubt auch eine Ausgestaltung der zweiten Sitzfläche 2b senkrecht zu seiner Längsachse, wobei die im zweiten Schließglied 4 angeordnete zweite Dichtung 7 axial gegenüber dieser zweiten Sitzfläche 2b im Druckeingriff abdichtet (in den Figuren nicht dargestellt). Diese Lösung ist allerdings nur dann möglich, wenn die axial wirkende zweite Dichtung 7 so duktil ist, dass die Anschlagposition des zweiten Schließgliedes 4 nach wie vor an der ventilgehäuseseitigen Anschlagfläche 2e* im Bereich der in die erste Sitzfläche 2a austretenden Übergangsfläche 2e sichergestellt ist.

Die zweite Sitzreinigungsströmung R2 verlässt den zweiten Drosselspalt D2 (**Figur 5**) zunächst entlang der ringförmigen Ausnehmung 2d und wird über die Übergangsfläche 2e zum Zentrum des Leckagehohlraumes 5 hin umgelenkt. Ein unmittelbares und direktes Bespritzen des Sitzbereichs der ersten Dichtung 6 wird dadurch sicher verhindert. Das erste Schließglied 3 ist bei der Sitzreinigung des zweiten Schließgliedes 4 axial derart positioniert, dass die zweite Sitzreinigungströmung R2 unbehindert über das erste Schließglied 3 hinweg strömen kann. Abhängig von den gegebenen Druckverhältnissen und unter dem Einfluss der Schwerkraft bei Anordnung des Doppelsitzventils 1 gemäß Zeichnungslage nimmt der Flüssigkeitsstrahl einen leicht parabelförmigen Verlauf, sodass die Stirnfläche des ersten Schließgliedes 3 mit seiner Anschrägung 3f tangential überströmt wird, was aus reinigungstechnischen Gründen wünschenswert ist. Durch diese Strömungsführung und Positionierung des ersten Schließgliedes 3 wird sogar ein Besaugen des Sitzbereichs der ersten Dichtung 6 erreicht, sodass selbst bei Verlust oder signifikanter Beschädigung der ersten Dichtung 6 kein Reinigungsmittel in das benachbarte erste Ventilgehäuseteil 1a eintreten kann. Die von der Übergangsfläche 2e und der ersten Sitzfläche 2a gebildete erste Umlaufkante U1, die mit der kleinstmöglichen Eckenabrundung r3 abgerundet ist, begünstigt ein Ablösen der Sitzreinigungsströmung R2 an der ersten Umlaufkante U1 und verhindert somit eine staudruckbildende Anströmung des zur ersten Dichtung 6 führenden Ringspaltes durch diese Sitzreinigungsströmung R2 oder durch einen Teilstrom derselben.

**In** **Figur 6a** ist der einstückige Anschweißteil 30 dargestellt, der aus dem Verstellstangenabschnitt 3a*, den drei Traversen 3e und dem Ring 3g gebildet ist. Die drei über den Umfang des Verstellstangenabschnitts 3a* gleichmäßig verteilt angeordneten Traversen 3e sind fest mit diesem verbunden. Sie sind jeweils radial außenseits gleichfalls fest mit dem umlaufenden Ring 3g verbunden. Der Anschweißteil 30 ist außenseits über den Ring 3g an den den leckagehohlraumfernen Abschnitt der Ablaufbohrung 3d begrenzenden Druckausgleichskolben 3c (s. **Figur 6b**) und innenseits über den Verstellstangenabschnitt 3a* an die erste Verstellstange 3a angeschweißt. Dabei ist der Ring 3g in seinem Innendurchmesser derart gegenüber dem Durchmesser der Ablaufbohrung 3d unter Zwischenschaltung eines konisch sich erweiternden Übergangsbereichs vergrößert, dass der Innendurchgang der Ablaufbohrung 3d durch die Traversen 3e nicht geschmälert ist.

### BEZUGSZEICHENLISTE DER VERWENDETEN ABKÜRZUNGEN

- 1: Doppelsitzyentil
- 10: Ventilgehäuse
- 1 a: erstes Ventilgehäuseteil
- 1 b: zweites Ventilgehäuseteil

- 2: Sitzring
- 2a: erste Sitzfläche (zylindrische Sitzfläche)
- 2b: zweite Sitzfläche (axial; radial; axial/radial)
- 2c: Verbindungsöffnung
- 2d: ringförmige Ausnehmung
- 2e: Übergangsfläche
- 2e*: ventilgehäuseseitige Anschlagfläche
- 2f: Öffnungsschräge

- 3: erstes Schließglied (Schieberkolben)
- 3*: erster zylindrischer Ansatz
- 3a: erste Verstellstange
- 3b: Verbindungsteil
- 3c: Druckausgleichskolben
- 3d: Ablaufbohrung
- 3d*: Verbindungsbohrung
- 3f: Anschrägung

- 30: Anschweißteil
- 3a*: Verstellstangenabschnitt
- 3e: Traverse
- 3g: Ring

- 4: zweites Schließglied
- 4*: zweiter zylindrischer Ansatz
- 4**: Endabschnitt
- 4a: zweite Verstellstange
- 4b: Ausnehmung
- 4c: Umfangswand
- 4d: Umlenkfläche
- 4e: Stirnfläche
- 4f: Anschlagfläche (schließgliedseitig)
- 4g: zweite Anschrägung
- 4h: Einfahrschräge

- 5: Leckagehohlraum
- 6: erste Dichtung (radial)
- 7: zweite Dichtung (axial; radial; axial/radial)

- a: radiale Breite der Übergangsfläche
- b: Breite (schließgliedseitige Anschlagfläche am Endabschnitt 4**)
- d1: erster Durchmesser
- d2: zweiter Durchmesser

- r1: Ausrundungsradius (der Übergangsfläche 2e)
- r2: Umlenkradius
- r3: erste Eckenabrundung (gehäuseseitig; Sitzring 2)
- r4: zweite Eckenabrundung (zweites Schließglied 4)

- x: axialer Sicherheitsabstand
- y: axialer Hinterschneidungsabstand

- α: erster Umlenkwinkel
- β: dritter Umlenkwinkel
- γ: Sitzwinkel
- δ: Anstellwinkel (der Einfahrschräge 4h)
- ε: zweiter Umlenkwinkel
- ζ: Neigungswinkel
- λ: Anschrägungswinkel
- ϕ: Öffnungswinkel

- D1: erster Drosselspalt
- D2: zweiter Drosselspalt
- H: voller Öffnungshub (volle Offenstellung)

- K: Kontur der Umlenkfläche 4b
- K1: erster Abschnitt (erste Gerade)
- K2: zweiter Abschnitt (gekrümmte Kontur)
- K3: dritter Abschnitt (zweite Gerade)
- Kn: letzter Abschnitt

- R1: erste Sitzreinigungsströmung
- R2: zweite Sitzreinigungsströmung
- T1: erster Teilhub (erste Teiloffenstellung/erste Sitzreinigungsstellung)
- T2: zweiter Teilhub (zweite Teiloffenstellung/zweite Sitzreinigungsstellung)
- U1: erste Umlaufkante
- U2: zweite Umlaufkante
- U3: dritte Umlaufkante
- Z: Zentrierstelle

## Patentansprüche

1. Doppelsitzventil mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1 a; 1 b) in ein anderes (1b; 1a) verhindern, die sowohl in der Schließ- als auch in der Offenstellung einen Leckagehohlraum (5) zwischen sich begrenzen, der mit der Umgebung des Doppelsitzventils (1) verbunden ist, wobei in der Schließstellung das als Schieberkolben ausgebildete erste Schließglied (3) in einer die Ventilgehäuseteile (1 a, 1 b) miteinander verbindenden Verbindungsöffnung (2c) dichtend Aufnahme findet und im Zuge seiner Öffnungsbewegung am einer zweiten Sitzfläche (2b) zugeordneten zweiten Schließglied (4) dichtend zur Anlage kommt und letzteres bei der weiteren Öffnungsbewegung gleichfalls in eine Offenstellung (H) überführt wird, wobei das erste Schließglied (3) an seinem Endabschnitt (3*) eine erste Dichtung (6) aufweist, die radial gegenüber einer in der Verbindungsöffnung (2c) ausgebildeten zylindrischen ersten Sitzfläche (2a) abdichtet, wobei das zweite Schließglied (4) an seinem dem ersten Schließglied (3) zugewandten Ende eine Ausnehmung (4b) mit einer im wesentlichen zylindrischen, mit der zylindrischen ersten Sitzfläche (2a) fluchtenden Umfangswand (4c) besitzt, und die Ausnehmung (4b) so dimensioniert ist, um während der Öffnungsbewegung den Endabschnitt (3*) und die radiale erste Dichtung (6) des ersten Schließgliedes (3) dichtend aufzunehmen, bevor das zweite Schließglied (4) öffnet, wobei die Schließglieder (3, 4) unabhängig voneinander durch einen Teilhub jeweils spaltweit in eine Sitzreinigungsstellung zwecks Spülung ihrer koaxialen Sitzflächen (2a, 2b) überführbar sind, wobei das zweite Schließglied (4) durch einen der Öffnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung überführbar sind, mit einem an jedem Schließglied (3, 4) leckageraumseitig angeordneten zylindrischen Ansatz (3*, 4*), der mit der zugeordneten Verbindungsöffnung (2c) einen ringförmigen Drosselspalt (D1, D2) bildet, wobei die erste Sitzfläche (2a) einen Durchmesser aufweist, der kleiner ist als der Durchmesser einer dem zweiten Schließglied (4) zugeordneten ringförmigen Ausnehmung (2d) in der Verbindungsöffnung (2c), und mit einer Übergangsfläche (2e) zwischen der ersten Sitzfläche (2a) und der ringförmigen Ausnehmung (2d),
**dadurch gekennzeichnet,**
• **dass** das zweite Schließglied (4) in seiner Schließstellung mit einer an einer Stirnfläche seines zylindrischen Ansatzes (4*) angeordneten Anschlagfläche (4f), die mit der Umfangswand (4c; 4h) eine zweite Umlaufkante (U2) ausbildet, an der Übergangsfläche (2e; 2e*) anliegt, und zwar unmittelbar an die erste Sitzfläche (2a) angrenzend,
• **dass** die Umfangswand (4c) an ihrem dem ersten Schließglied (3) abgewandten Ende in eine rotationssymmetrische Umlenkfläche (4d) übergeht (Anfangspunkt einer Kontur (K)) und diese Umlenkfläche (4d) in einer im Wesentlichen senkrecht zur Längsachse des zweiten Schließgliedes (4) orientierten Stirnfläche (4e) der Ausnehmung (4b) ausmündet (Ausmündungspunkt der Kontur (K)),
• und **dass**, im Meridianschnitt gesehen, die Umlenkfläche (4d) die Kontur (K) mit knickfreiem Verlauf aufweist, wobei ein Richtungsvektor im Ausmündungspunkt der Umlenkfläche (4d) in eine im ersten Schließglied (3) angeordnete zentrische Ablaufbohrung (3d; 3d*) weist, ohne mit dem ersten Schließglied (3) im Bereich seiner den Leckagehohlraum (5) berandenden Bereiche staudruckbildend zu kollidieren.

2. Doppelsitzventil nach Anspruch 1,
**dadurch gekennzeichnet,**
**dass** eine dem Leckagehohlraum (5) zugewandte stirnseitige Begrenzung des ersten Schließgliedes (3) einen axialen Sicherheitsabstand (x) vom Richtungsvektor an einer als eine erste Umlaufkante (U1) ausgebildeten Austrittsstelle der Übergangsfläche (2e) in die erste Sitzfläche (2a) besitzt.

3. Doppelsitzventil nach Anspruch 2,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur Übergangsfläche (2e) bestimmen.

4. Doppelsitzventil nach einem der Ansprüche 1 bis 3,
**dadurch gekennzeichnet,**
**dass** die von der Übergangsfläche (2e) und der ersten Sitzfläche (2a) gebildete erste Umlaufkante (U1) mit einer kleinstmöglichen ersten Eckenabrundung (r3) abgerundet ist.

5. Doppelsitzventil nach einem der Ansprüche 1 bis 5,
**dadurch gekennzeichnet,**
**dass** die ringförmige Ausnehmung (2d) mit der Übergangsfläche (2e) einen stumpfen oder einen senkrechten ersten Umlenkwinkel (α) bildet

6. Doppelsitzventil nach Anspruch 5,
**dadurch gekennzeichnet,**
**dass** die Ausnehmung (2d) einen mit einem Ausrundungsradius (r1) ausgeführten gerundeten Übergang zur Übergangsfläche (2e) aufweist.

7. Doppelsitzventil nach einem der Ansprüche 1 bis 6,
**dadurch gekennzeichnet,**
**dass** die zylindrische Umfangswand (4c) in eine Einfahrschräge (4h) zur Erzielung eines glatten Überganges der radialen ersten Dichtung (6) ausmündet und die Einfahrschräge (4h) mit der Anschlagfläche (4f) die zweite Umlaufkante (U2) ausbildet.

8. Doppelsitzventil nach einem der Ansprüche 1 bis 7,
**dadurch gekennzeichnet,**
**dass** die zweite Umlaufkante (U2) mit einer kleinstmöglichen zweiten Eckenabrundung (r4) abgerundet ist.

9. Doppelsitzventil nach einem der Ansprüche 1 bis 8,
**dadurch gekennzeichnet,**
**dass** die Umlenkfläche (4d) die Stirnfläche (4e) um einen axialen Hinterschneidungsabstand (y) hinterschneidet.

10. Doppelsitzventil nach einem der Ansprüche 1 bis 9,
**dadurch gekennzeichnet,**
**dass** die Kontur (K) eine Abfolge von Abschnitten (K1, K2, ..., Kn) aufweist, dass der erste Abschnitt (K1) und der aus der Stirnfläche (4e) ausmündende dritte und letzte Abschnitt (K3 = Kn) jeweils geradlinig ausgeführt sind, und dass diese Abschnitte (K1, K3) über den zweiten Abschnitt (K2), der letztere tangential mit einem größtmöglichen Umlenkradius (r2) abrunden, miteinander verbunden sind.

11. Doppelsitzventil nach einem der Ansprüche 1 bis 10,
**dadurch gekennzeichnet,**
• **dass** die Kontur (K) aus einer Abfolge gekrümmter Abschnitte (K1, K2, K3, ..., Kn) besteht, die an ihren jeweiligen Übergangsstellen jeweils eine gemeinsame Tangente besitzen
• oder dass die Kontur (K) aus einem einzigen Abschnitt kontinuierlich veränderter Krümmungen besteht
• oder dass die Kontur (K) aus einem einzigen Abschnitt mit konstanter Krümmung besteht.

12. Doppelsitzventil nach einem der Ansprüche 1 bis 11,
**dadurch gekennzeichnet,**
**dass** der Richtungsvektor des letzten Abschnitts (Kn) gegenüber der Stirnfläche (4e) einen dritten Umlenkwinkel (β), bevorzugt im Bereich 5 ≤ β ≤ 20 Grad, bevorzugt β = 15 Grad aufweist.

13. Doppelsitzventil nach einem der Ansprüche 1 bis 12,
**dadurch gekennzeichnet,**
**dass** die Ablaufbohrung (3d) über mehrere, über den Umfang verteilte Verbindungsbohrungen (3d*) den Leckagehohlraum (5) mit der Umgebung des Doppelsitzventils (1) verbindet, und dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist.

14. Doppelsitzventil nach einem der Ansprüche 1 bis 12,
**dadurch gekennzeichnet,**
**dass** die Ablaufbohrung (3d) den Leckagehohlraum (5) mit der Umgebung des Doppelsitzventils (1) verbindet, dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist, und dass eine mit dem ersten Schließglied (3) verbundene erste Verstellstange (3a) eine mit dem zweiten Schließglied (4) verbundene, als Hohlstange ausgeführte zweite Verstellstange (4a) konzentrisch durchdringt, sich fliegend durch die Ablaufbohrung (3d) hindurch fortsetzt und an einem dem zweiten Schließglied (4) abgewandten Ende des ersten Schließgliedes (3) mit letzterem über wenigstens eine im Wesentlichen radial orientierte Traverse (3e) fest verbunden ist.

15. Doppelsitzventil nach Anspruch 13 oder 14,
**dadurch gekennzeichnet,**
**dass** die Anschrägung (3f) als Kegelmantelfläche ausgeführt ist.

16. Doppelsitzventil nach Anspruch 15,
**dadurch gekennzeichnet,**
**dass** die Kegelmantelfläche gegenüber der Grundfläche des Kegels um einen Neigungswinkel (ζ), bevorzugt im Bereich 10 ≤ ζ ≤ 20 Grad, bevorzugt ζ = 15 Grad geneigt ist.

17. Doppelsitzventil nach Anspruch 16,
**dadurch gekennzeichnet,**
**dass** drei über den Umfang gleichmäßig verteilt angeordnete Traversen (3e) fest an einem Verstellstangenabschnitt (3a*) vorgesehen sind, die jeweils radial außenseits fest mit einem umlaufenden Ring (3g) verbunden sind, und dass der Verstellstangenabschnitt (3a*), die Traversen (3e) und der Ring (3g) einen einstückigen Anschweißteil (30) bilden.

18. Doppelsitzventil nach Anspruch 17,
**dadurch gekennzeichnet,**
**dass** der Anschweißteil (30) außenseits über den Ring (3g) an einen einen leckagehohlraumfernen Abschnitt der Ablaufbohrung (3d) begrenzenden Druckausgleichskolben (3c) und innenseits über den Verstellstangenabschnitt (3a*) an die erste Verstellstange (3a) anschließt, und dass der Ring (3g) in seinem Innendurchmesser derart gegenüber dem Durchmesser der Ablaufbohrung (3d) unter Zwischenschaltung eines konisch sich erweiternden Übergangsbereichs vergrößert ist, dass der Innendurchgang der Ablaufbohrung (3d) durch die Traversen (3e) nicht geschmälert ist.

19. Doppelsitzventil nach einem der Ansprüche 1 bis 18,
**dadurch gekennzeichnet,**
**dass** die zweite Sitzfläche (2b) zylindrisch ausgeführt und durch die ringförmige Ausnehmung (2d) gebildet ist, und dass das zweite Schließglied (4) eine zweite Dichtung (7) aufweist, die radial gegenüber der zweiten Sitzfläche (2b) im Gleiteingriff abdichtet.

20. Doppelsitzventil nach Anspruch 19,
**dadurch gekennzeichnet,**
**dass** die zweite Sitzfläche (2b) eine zum zweiten Schließglied (4) hin sich erweiternde abgeschrägte Kante zur Erzielung eines glatten Überganges der radialen zweiten Dichtung (7) aufweist.

21. Doppelsitzventil nach Anspruch 20,
**dadurch gekennzeichnet,**
**dass** die abgeschrägt Kante gegenüber der zweiten Sitzfläche (2b) um einen Anstellwinkel, bevorzugt im Bereich 7,5 bis 15 Grad, bevorzugt mit 10 Grad angestellt ist.

22. Doppelsitzventil nach Anspruch 20 oder 21,
**dadurch gekennzeichnet,**
**dass** sich die abgeschrägte Kante an ihrem dem zweiten Schließglied (4) zugewandten Ende in eine Öffnungsschräge (2f) erweitert, wobei letztere gegenüber der zweiten Sitzfläche (2b) um einen Öffnungswinkel (ϕ), bevorzugt im Bereich 35 ≤ ϕ ≤ 55 Grad, bevorzugt mit ϕ = 45 Grad angestellt ist.

23. Doppelsitzventil nach einem der Ansprüche 1 bis 18,
**dadurch gekennzeichnet,**
**dass** die zweite Sitzfläche (2b) kegelförmig ausgeführt und gegenüber der zylindrischen Ausnehmung (2d) um einen Sitzwinkel (γ) geneigt ist, und dass das zweite Schließglied (4) eine zweite Dichtung (7) aufweist, die axial/radial gegenüber der zweiten Sitzfläche (2b) im Gleit-/Druckeingriff abdichtet.

24. Doppelsitzventil nach Anspruch 23,
**dadurch gekennzeichnet,**
**dass** der Sitzwinkel (γ) im Bereich 25 ≤ γ ≤ 35 Grad, bevorzugt γ = 30 Grad ausgeführt ist.

25. Doppelsitzventil nach Anspruch 23 oder 24,
**dadurch gekennzeichnet,**
**dass** sich die zweite Sitzfläche (2b) an ihrem dem zweiten Schließglied (4) zugewandten Ende in eine Öffnungsschräge (2f) erweitert, wobei letztere gegenüber der zylindrischen Ausnehmung (2d) um einen Öffnungs winkel (ϕ), bevorzugt im Bereich 35 ≤ ϕ ≤ 55 Grad, bevorzugt mit ϕ = 45 Grad angestellt ist.

26. Doppelsitzventil nach einem der Ansprüche 1 bis 18,
**dadurch gekennzeichnet,**
**dass** die zweite Sitzfläche (2b) senkrecht zur Längsachse des Doppelsitzventils (1) angeordnet ist, und dass das zweite Schließglied (4) eine zweite Dichtung (7) aufweist, die axial gegenüber der zweiten Sitzfläche (2b) im Druckeingriff abdichtet.

27. Doppelsitzventil nach einem der Ansprüche 1 bis 26,
**dadurch gekennzeichnet,**
**dass** ein Endabschnitt (4**) des zweiten zylindrischen Ansatzes (4*) radial außenseits im Anschluss an die Anschlagfläche (4f) eine ringförmig umlaufende zweite Anschrägung (4g) aufweist, die gegen die Anschlagfläche (4f) unter einem Anschrägungswinkel (λ) verläuft, der derart bemessen ist, dass eine zwischen der zweiten Anschrägung (4g) und dem zweiten Durchmesser (d2) des zweiten zylindrischen Ansatzes (4*) durch Abrundung gebildete dritte Umlaufkante (U3), in radialer Richtung gesehen, so weit wie möglich nach außen verlagert und so nah wie zulässig an den durch den Ausrundungsradius (r1) bestimmten Verlauf der Übergangsfläche (2e) herangeführt ist und dort eine ringförmig umlaufende Zentrierstelle (Z) bildet.

## Claims

1. Double seat valve comprising two closing elements (3, 4) arranged in series and movable with regard to each other, which prevent in the closed position of the double seat valve (1) that fluids flow from one valve housing part (1a; lb) into an other one, which define in the closed as well as in the open position a leakage cavity (5) between them, which is connected with the surrounding of the double seat valve (1), wherein in the closed position the first closing element (3) formed as a slide piston is received in sealing manner in a connecting opening (2c) connecting the valve housing parts (1a, 1b) with each other and comes to abut in sealing manner in the course of its opening movement at the second closing element (4) associated with a second seat (2b), and the latter element is also transferred to an open position (H) during the further opening movement, the first closing element (3) comprising a first seal (6) at its end section (3*), which seals radially against a cylindrical first seat (2a) formed in the connecting opening (2c), the second closing element (4) comprising at its end facing towards the first closing element (3) a recess (4b) with a substantially cylindrical peripheral wall (4c) aligned with the cylindrical first seat (2a), and the recess being dimensioned in order to sealingly receive the end section (3*) and the radial first seal (6) of the first closing element (3) during the opening movement, before the second closing element (4) opens, wherein the closing elements (3, 4) can be transferred independently from each other by a partial lift each gap-wide to a seat cleaning position in order to rinse their coaxial seats (2a, 2b), wherein the second closing element (4) can be transferred by a second partial lift (T2) in the same direction as the opening movement and the first closing element (3) by a first partial lift (T1) in the direction opposed to the opening movement to its respective seat cleaning position, a cylindrical lug (3*, 4*) arranged at each closing element (3, 4) on the leakage cavity side, which forms an annular choke gap (D1, D2) with the associated connecting opening (2c), the first seat (2a) having a diameter, which is smaller than the diameter of an annular recess (2d) associated with the second closing element (4) in the connecting opening (2c), and a transition area (2e) between the first seat (2a) and the annular recess (2d),
**characterised in that**
• the second closing element (4) abuts in its closed position with a stop face (4f) arranged at a front face of its cylindrical lug (4*), which forms a second circumferential edge (U2) with the circumferential wall (4c; 4h), against the transition surface (2e; 2e*), and that directly adjacent to the first seat (2a),
• the circumferential wall (4c) at its end averted from the first closing element (3) merges into a rotationaily symmetrical diversion area (4d) (starting point of a contour (K)) and this diversion area (4d) leads into a front face (4e) of the recess (4b) oriented substantially vertically to the longitudinal axis of the second closing element (4) (outlet point of the contour (K) ),
• and that, viewed in vertical centre section, the diversion area (4d) comprises the contour (K) with an unbent shape, wherein a direction vector in the outlet point of the diversion area (4d) points into a central discharge bore (3d; 3d*) arranged in the first closing element (3), without colliding with the first closing element (3) in the region of its areas bounding the leakage cavity (5).

2. Double seat valve according to claim 1,
**characterised in that**
a frontal boundary of the first closing element (3) directed towards the leakage cavity (5) has an axial safety distance (x) from the direction vector at an exit point of the transition area (2e) formed as a first circumferential edge (U1) into the first seat (2a).

3. Double seat valve according to claim 2,
**characterised in that**
the safety distance (x) is at least as large as the sum of all production tolerances of the components of the double seat valve (1), which determine in the closed position of the first closing element (3) the smallest axial distance thereof to the transition area (2e).

4. Double seat valve according to claim 1 to 3,
**characterised in that**
the first circumferential edge (U1) formed by the transition area (2e) and the first seat (2a) is rounded with the smallest-possible first corner rounding (r3).

5. Double seat valve according to claim 1 to 4
**characterised in that**
the annular recess (2d) forms an obtuse or a vertical first diversion angle (α) with the transition area (2e).

6. Double seat valve according to claim 5,
**characterised in that**
the recess (2d) comprises a rounded transition configured with a radius of curvature (r1) to the transition area (2e).

7. Double seat valve according to one of the claims 1 to 6, **characterised in that**
the cylindrical circumferential wall (4c) leads into an insertion slope (4h) in order to achieve a smooth transition of the radial first seal (6), and the insertion slope (4h) forms a second circumferential edge (U2) with the stop face (4f).

8. Double seat valve according to one of the claims 1 to 7, **characterised in that**
the second circumferential edge (U2) is rounded with a smallest possible second corner rounding (r4).

9. Double seat valve according to one of the claims 1 to 8,
**characterised in that**
the diversion area (4d) undercuts the front face (4e) by an axial undercutting distance (y).

10. Double seat valve according to one of the claims 1 to 9,
**characterised in that**
the contour (K) comprises a sequence of sections (K1, K2,..., Kn) , that the first section (K1) and the third and last section (K3=Kn) leading out of the front face (4e) are each configured linear, and that these sections (K1, K3) are connected with each other through the second section (K2), which tangentially rounds the latter with a largest-possible diversion radius (r2).

11. Double seat valve according to one of the claims 1 to 10, **characterised in that**
• the contour (K) comprises a sequence of bent sections (K1, K2, K3,..., Kn), which each have a common tangent at their respective transition points
• or that the contour (K) consists of a single section of continuously varying curvatures
• or that the contour (K) consists of a single section with constant curvature.

12. Double seat valve according to one of the claims 1 to 11,
**characterised in that**
the direction vector of the last section (Kn) comprises a third diversion angle (β) with regard to the front face (4e} preferably in the range of 5 ≤ β ≤ 20 degrees, preferably β= 15 degrees.

13. Double seat valve according to one of the claims 1 to 12,
**characterised in that**
the discharge opening (3d) connects the leakage cavity (5) with the surrounding of the double seat valve (1) through connecting bores (3d*) spaced around the circumference, and that the frontal boundary of the first closing element (3) directed towards the leakage cavity comprises a chamfer (3f) dropping circumferentially on all sides towards the discharge bore (3d) .

14. Double seat valve according to one of the claims 1 to 12,
**characterised in that**
the discharge bore (3d) connects the leakage cavity (5) with the surrounding of the double seat valve (1), that the frontal boundary of the first closing element (3) directed towards the leakage cavity (5) comprises a chamfer (3f) dropping circumferentially on all sides towards the discharge bore (3d), and that a first shifting rod (3a) connected with the first closing element (3) concentrically penetrates a second shifting rod (4a) connected with the second closing element (4) and configured as a hollow rod, continues flying through the discharge bore (3d) and is firmly connected with the first closing element at an end of the first closing element (3) averted from the second closing element (4) through a substantially radially oriented traverse (3e).

15. Double seat valve according to claim 13 or 14, **characterised in that** the chamfer (3f) is configured as an envelope of cone.

16. Double seat valve according to claim 15,
**characterised in that**
the envelope of cone is inclined with regard to the base of the cone by an angle of inclination (ζ) preferably in the range of 10 ≤ ζ ≤ 20 degrees, preferably ζ = 15 degrees.

17. Double seat valve according to claim 16,
**characterised, in that**
three traverses (3e) arranged equally spaced across the circumference are fixedly provided at a shifting rod section (3a*) , which are each fixedly connected on the radial outside with a circumferential ring (3g), and that the shifting rod section (3a*), the traverses (3e) and the ring (3g) form an integral welding part (30).

18. Double seat valve according to claim 17,
**characterised in that**
the welding part (30) connects on the outside through the ring (3g) to a pressure balance piston (3c) bounding a section of the discharge bore (3d) remote from the leakage cavity and on the inside through the shifting rod section (3a*) to the first shifting rod (3a), and that the ring (3g) is enlarged in its inner diameter with regard to the diameter of the discharge bore (3d) with interposition of a conically expanding transition area such that the inner passage of the discharge bore (3d) is not narrowed by the traverses (3e).

19. Double seat valve according to one of the claims 1 to 18, **characterised in that**
the second seat (2b) is configured cylindrical and formed by the annular recess (2d), and that the second closing element (4) comprises a second seal (7), which seals radially against the second seat (2b) in sliding engagement.

20. Double seat valve according to claim 19,
**characterised in that**
the second seat (2b) comprises a chamfered edge expanding towards the second closing element (4) for achieving a smooth transition of the radial second seal (7).

21. Double seat valve according to claim 20,
**characterised in that**
the chamfered edge is pitched with regard to the second seat (2b) by an angle of pitch preferably in the range of 7.5 to 15 degrees, preferably with 10 degrees.

22. Double seat valve according to claim 20 or 21,
**characterised in that**
the chamfered edge expands at its end directed towards the second closing element (4) into on opening slope (2f), the latter being pitched with regard to the second seat (2b) by an opening angle (ϕ) preferably in the range of 35 ≤ ϕ ≤ 55 degrees, preferably ϕ=45 degrees.

23. Double seat valve according to one of the claims 1 to 18, **characterised in that**
the second seat (2b) is configured conical and is inclined with regard, to the cylindrical recess (2d) by a seat angle (γ) , and that the second closing element (4) comprises a second seal (7), which seals axially/radially against the second seat (2b) in sliding/pressing engagement.

24. Double seat valve according to claim. 23,
**characterised in that**
the seat angle (γ) is configured in the range of 25 ≤ γ ≤ 35 degrees, preferably γ = 30 degrees.

25. Double seat valve according to claim 23 or 24,
**characterised in that**
the second seat (2b) expands at its end directed towards the second closing element (4) into an opening slope (2f), the latter being pitched with regard to the cylindrical recess (2d) by an opening angle (ϕ), preferably in the range of 35 ≤ ϕ ≤ 55 degrees, preferably with ϕ = 45 degrees.

26. Double seat valve according one of the claims 1 to 18,
**characterised in that**
the second seat (2b) is arranged vertically to the longitudinal axis of the double seat valve (1), and that the second closing element (4) comprises a second seat (7), which seals axially against the second seat (2b) in pressing engagement.

27. Double seat valve according to one of the claims 1 to 26, **characterised in that**
an end section (4**) of the second cylindrical lug (4*) comprises an annular circumferential second chamfer (4g) radially on the outside following the stop face (4f), which extends against the stop face ((4f)) under a chamfer angle (A) which is dimensioned such that a third circumferential edge (U3) formed by rounding between the second chamfer (4g) and the second diameter (d2) of the second cylindrical lug (4*) is shifted, viewed in radial direction, outwards as far as possible and as close as admissible to the shape of the transition area (2e) determined by the radius of curvature (r1) and forms an annular circumferential centring point (Z) there.

## Revendications

1. Soupape à double siège comprenant deux éléments de fermeture (3, 4) mobiles l'un par rapport à l'autre et disposés en série, qui évitent dans la position de fermeture de la soupape à double siège (1) le débordement de fluides d'une partie de cage de soupape (1a; 1b) à une autre (1b; 1a), qui délimitent non seulement dans la position de fermeture, mais aussi dans la position d'ouverture, une cavité de fuite (5) entre eux, cette cavité de fuite étant reliée à l'environnement de la soupape à double siège (1), dans la position de fermeture le premier élément de fermeture (3), configuré comme un piston coulissant, étant positionné de façon étanche dans un orifice de communication (2c) reliant les parties de cage de soupape (1a, 1b) entre elles, et au cours de son mouvement d'ouverture, venant en appui étanche contre le second élément de fermeture (4) associé à une seconde surface d'appui (2b), et ce dernier étant également transféré lors du mouvement d'ouverture ultérieur dans une position d'ouverture (H), moyennant quoi le premier élément de fermeture (3) présente sur sa section d'extrémité (3*) un premier joint (6) qui assure une fonction d'étanchéité radiale par rapport à une première surface d'appui (2a) cylindrique conçue dans l'orifice de communication (2c), moyennant quoi le second élément de fermeture (4) possède à son extrémité dirigée vers le premier élément de fermeture (3) un évidement (4b) comprenant une paroi périphérique (4c) essentiellement cylindrique alignée sur la première surface d'appui cylindrique (2a), et l'évidement (4b) est conçu pour recevoir de façon étanche pendant le mouvement d'ouverture la section d'extrémité (3*) et le premier joint radial (6) du premier élément de fermeture (3), avant que le second élément de fermeture (4) s'ouvre, les éléments de fermeture (3, 4) pouvant être déplacés indépendamment les uns des autres par une course partielle d'une largeur de fente dans une position de nettoyage de siège à des fins de rinçage de leurs surfaces d'appui coaxiales (2a, 2b), sachant que le second élément de fermeture (4) peut être déplacé par une seconde course partielle (T2) axée sur le mouvement d'ouverture et le premier élément de fermeture (3) par une première course partielle (T1) opposée au mouvement d'ouverture dans sa position de nettoyage de siège respective, avec un épaulement (3*, 4*) cylindrique disposé côté cavité contre chaque élément de fermeture (3, 4), lequel épaulement forme avec l'orifice de communication (2c) associé une fente d'étranglement annulaire (D1, D2), la première surface de siège (2a) présentant un diamètre qui est inférieur au diamètre d'un évidement (2d) annulaire associé au second élément de fermeture (4) dans l'orifice de communication (2c), et avec une surface de transition (2e) entre la première surface d'appui (2a) et l'évidement annulaire (2d),
**caractérisée en ce que**
• le second élément de fermeture (4) dans sa position de fermeture avec une surface d'arrêt (4f) disposée contre une surface frontale de son épaulement cylindrique (4*), qui forme avec la surface périphérique (4c ; 4h) une seconde arête circulaire (U2), s'appuie contre la surface de transition (2e ; 2e*), et est directement adjacent à la première surface d'appui (2a),
• la paroi périphérique (4c) à son extrémité opposée au premier élément de fermeture (3) se transforme en une surface de déviation (4d) symétrique en rotation (point de départ d'un contour (K)) et cette surface de déviation (4d) aboutit à une surface frontale (4e) orientée essentiellement perpendiculairement à l'axe longitudinal du second élément de fermeture (4) de l'évidement (4b) (point de sortie du contour (K)),
• vu en coupe méridienne, la surface de déviation (4d) présente le contour (K) avec étendue non coudée, un vecteur directionnel indiquant au point de sortie de la surface de déviation (4d) un alésage d'écoulement centrique (3d ; 3d*) disposé dans le premier élément de fermeture (3), sans heurter, avec formation d'une pression dynamique, le premier élément de fermeture (3) dans la partie de ses zones bordant la cavité de fuite (5).

2. Soupape à double siège selon la revendication 1,
**caractérisée en ce que**
une délimitation frontale dirigée vers la cavité de fuite (5) du premier élément de fermeture (3) possède une distance de sécurité (x) axiale du vecteur directionnel à un point de sortie configuré comme une première arête circulaire (U1) de la surface de transition (2e) à la première surface d'appui (2a).

3. Soupape à double siège selon la revendication 2,
**caractérisée en ce que**
la distance de sécurité (x) est au moins aussi importante que la somme de toutes les tolérances de fabrication des composants de la soupape à double siège (1), qui définissent dans la position de fermeture du premier élément de fermeture (3) sa distance axiale la plus faible avec la surface de transition (2e).

4. Soupape à double siège selon une des revendications 1 à 3,
**caractérisée en ce que**
la première arête circulaire (U1) formée par la surface de transition (2e) et la première surface d'appui (2a) est arrondie avec un premier arrondissage de coins (r3) le plus petit possible.

5. Soupape à double siège selon une des revendications 1 à 5,
**caractérisée en ce que**
l'évidement annulaire (2d) forme avec la surface de transition (2e) un premier angle de déviation (α) obtus ou orthogonal.

6. Soupape à double siège selon la revendication 5,
**caractérisée en ce que**
l'évidement (2d) présente un passage arrondi muni d'un rayon d'arrondissage (r1) vers la surface de transition (2e).

7. Soupape à double siège selon une des revendications 1 à 6,
**caractérisée en ce que**
la paroi périphérique (4c) cylindrique aboutit à une obliquité d'entrée (4h) afin d'obtenir un passage lisse du premier joint radial (6), et l'obliquité d'entrée (4h) forme avec la surface d'arrêt (4f) la seconde arête circulaire (U2).

8. Soupape à double siège selon une des revendications 1 à 7,
**caractérisée en ce que**
la seconde arête circulaire (U2) est arrondie avec un second arrondissage de coins (r4) le plus petit possible.

9. Soupape à double siège selon une des revendications 1 à 8,
**caractérisée en ce que**
la surface de déviation (4d) contre-dépouille la surface frontale (4e) d'une distance de contre-dépouille axiale (y).

10. Soupape à double siège selon une des revendications 1 à 9,
**caractérisée en ce que**
le contour (K) présente une suite de sections (K1, K2,..., Kn), la première section (K1) et la troisième et dernière section (K3=Kn) sortant de la surface frontale (4e) sont réalisées respectivement rectilignes, et que ces sections (K1, K3) sont reliées entre elles par la seconde section (K2) qui arrondit ces dernières tangentiellement avec un rayon de déviation (r2) le plus grand possible.

11. Soupape à double siège selon une des revendications 1 à 10,
**caractérisée en ce que**
• le contour (K) est formé d'une suite de sections courbes (K1, K2, K3, ..., Kn) qui possèdent sur leurs points de passage respectifs chacune une tangente commune
• ou le contour (K) est formé d'une unique section de courbures modifiées continuellement
• ou le contour (K) est formé d'une unique section de courbure constante.

12. Soupape à double siège selon une des revendications 1 à 11,
**caractérisée en ce**
le vecteur directionnel de la dernière section (Kn) présente par rapport à la surface frontale (4e) un troisième angle de déviation (β), de préférence dans la plage 5 ≤ β ≤ 20 degrés, de préférence β = 15 degrés.

13. Soupape à double siège selon une des revendications 1 à 12,
**caractérisée en ce que**
l'alésage d'écoulement (3d) relie, via plusieurs alésages de liaison (3d*) répartis sur la périphérie, la cavité de fuite (5) à l'environnement de la soupape à double siège (1), et **en ce que** la délimitation frontale dirigée vers la cavité de fuite (5) du premier élément de fermeture (3) présente une partie oblique (3f) inclinée tout autour de la périphérie vers l'alésage d'écoulement (3d).

14. Soupape à double siège selon une des revendications 1 à 12,
**caractérisée en ce que**
l'alésage d'écoulement (3d) relie la cavité de fuite (5) à l'environnement de la soupape à double siège (1), et **en ce que** la délimitation frontale dirigée vers la cavité de fuite (5) du premier élément de fermeture (3) présente une partie oblique (3f) inclinée tout autour de la périphérie vers l'alésage d'écoulement (3d), et **en ce qu'**une première tige de réglage (3a) reliée au premier élément de fermeture (3) traverse concentriquement une seconde tige de réglage (4a) reliée au second élément de fermeture (4) et configurée comme une barre creuse, se poursuit en porte-à-faux à travers l'alésage d'écoulement (3d) et est reliée fixement à une extrémité opposée au second élément de fermeture (4) du premier élément de fermeture (3) à ce dernier par au moins une traverse (3e) orientée essentiellement radialement.

15. Soupape à double siège selon les revendications 13 ou 14,
**caractérisée en ce que**
la partie oblique (3f) est conçue comme une surface d'aire latérale de cône

16. Soupape à double siège selon la revendication 15,
**caractérisée en ce que**
la surface d'aire latérale de cône est inclinée par rapport à la surface de base du cône selon un angle d'inclinaison (ζ), de préférence dans la plage de 10 ≤ ζ ≤ 20 degrés, de préférence ζ = 15 degrés.

17. Soupape à double siège selon la revendication 16,
**caractérisée en ce que**
trois traverses (3e) disposées uniformément sur la périphérie sont prévues fixement sur une section de tige de réglage (3a*), lesquelles sont reliées respectivement radialement à l'extérieur fixement à une bague périphérique (3g), et **en ce que** la section de tige de réglage (3a*), les traverses (3e) et la bague (3g) forment une pièce soudée (30) d'un seul tenant.

18. Soupape à double siège selon la revendication 17,
**caractérisée en ce que**
la pièce soudée (30) est raccordée à l'extérieur par la bague (3g) à un piston d'équilibrage (3c) délimitant une section éloignée de la cavité de fuite de l'alésage d'écoulement (3d), et à l'intérieur par la section de tige de réglage (3a*) à la première tige de réglage (3a), et **en ce que** la bague (3g) s'agrandit dans son diamètre interne par rapport au diamètre de l'alésage d'écoulement (3d) en intercalant une zone de transition s'élargissant de façon conique, de telle sorte que le passage interne de l'alésage d'écoulement (3d) n'est pas rétréci par les traverses (3e).

19. Soupape à double siège selon une des revendications 1 à 18,
**caractérisée en ce que**
la seconde surface d'appui (2b) est conçue cylindrique et est formée par l'évidement annulaire (2d), et **en ce que** le second élément de fermeture (4) présente un second joint (7) qui assure une fonction d'étanchéité radiale par rapport à la seconde surface d'appui (2b) en prise coulissante.

20. Soupape à double siège selon la revendication 19,
**caractérisée en ce que**
la seconde surface d'appui (2b) présente une arête oblique s'étendant vers le second élément de fermeture (4) pour obtenir un passage lisse du second joint radial (7).

21. Soupape à double siège selon la revendication 20,
**caractérisée en ce que**
l'arête oblique est ajustée par rapport à la seconde surface d'appui (2b) selon un angle de réglage, de préférence dans la plage de 7,5 à 15 degrés, de préférence à 10 degrés.

22. Soupape à double siège selon les revendications 20 ou 21,
**caractérisée en ce que**
l'arête oblique s'élargit à son extrémité dirigée vers le second élément de fermeture (4) dans une inclinaison d'ouverture (2f), cette dernière étant ajustée par rapport à la seconde surface d'appui (2b) à un angle d'ouverture (ϕ), de préférence dans la plage 35 ≤ ϕ ≤ 55 degrés, de préférence ϕ = 45 degrés.

23. Soupape à double siège selon une des revendications 1 à 18,
**caractérisée en ce que**
la seconde surface d'appui (2b) est réalisée de forme conique et est inclinée par rapport à l'évidement cylindrique (2d) selon un angle de siège (γ),
et **en ce que** le second élément de fermeture (4) présente un second joint (7) qui assure une fonction d'étanchéité axiale/radiale par rapport à la seconde surface d'appui (2b) en prise coulissante/forcée.

24. Soupape à double siège selon la revendication 23,
**caractérisée en ce que**
l'angle de siège (γ) est réalisé dans la plage 25 ≤ γ ≤ 35 degrés, de préférence γ = 30 degrés.

25. Soupape à double siège selon les revendications 23 ou 24,
**caractérisée en ce que**
la seconde surface d'appui (2b) s'élargit à son extrémité dirigée vers le second élément de fermeture (4) dans une inclinaison d'ouverture (2f), cette dernière étant ajustée par rapport à l'évidement cylindrique (2d) à un angle d'ouverture (ϕ), de préférence dans la plage 35 ≤ ϕ ≤ 55 degrés, de préférence ϕ = 45 degrés.

26. Soupape à double siège selon une des revendications 1 à 18,
**caractérisée en ce que**
la seconde surface d'appui (2b) est disposée perpendiculairement à l'axe longitudinal de la soupape à double siège (1), et **en ce que** le second élément de fermeture (4) présente un second joint (7) qui assure une fonction d'étanchéité axiale par rapport à la seconde surface d'appui (2b) en prise forcée.

27. Soupape à double siège selon une des revendications 1 à 26,
**caractérisée en ce que**
une section d'extrémité (4**) du second épaulement cylindrique (4*) présente radialement côté extérieur à la suite de la surface d'arrêt (4f) une seconde inclinaison (4g) périphérique annulaire qui s'étend contre la surface d'arrêt (4f) à un angle d'inclinaison (λ), qui est dimensionné de telle sorte qu'une troisième arête périphérique (U3) formée par arrondissage entre la seconde inclinaison (4g) et le second diamètre (d2) du second épaulement cylindrique (4*), vu dans la direction radiale, se déplace le plus loin possible vers l'extérieur et est approché aussi près que possible (admissible) de l'étendue de la surface de transition (2e) définie par le rayon d'arrondissage (r1) et y forme un point de centrage (Z) périphérique annulaire.
